# EUROPÄISCHE PATENTSCHRIFT

(11) **EP 4 035 315 B1**
(45) Veröffentlichungstag und Bekanntmachung des Hinweises auf die Patenterteilung: **21.12.2022**
(21) Anmeldenummer: 20807719.8
(22) Anmeldetag: 13.11.2020
(51) Int. Cl.: H04L 12/42

(54) **AUTOMATISIERUNGSNETZWERK UND VERFAHREN ZUR DATENÜBERTRAGUNG IN EINEM AUTOMATISIERUNGSNETZWERK**
AUTOMATION NETWORK AND METHOD FOR TRANSMITTING DATA IN AN AUTOMATION NETWORK
RÉSEAU D'AUTOMATISATION ET PROCÉDÉ DE TRANSMISSION DE DONNÉES DANS UN RÉSEAU D'AUTOMATISATION

(30) Priorität: 25.11.2019 DE 102019131823
(43) Veröffentlichungstag der Anmeldung: 03.08.2022
(73) Patentinhaber: Beckhoff Automation GmbH, 33415 Verl (DE)
(72) Erfinder: BÜTTNER, Holger, 12205 Berlin (DE); JANSSEN, Dirk, Verl 33415 (DE); VONNAHME, Erik, 33154 Salzkotten (DE); BUNTE, Thorsten, 33335 Gütersloh (DE); RETTIG, Thomas, 33378 Rheda-Wiedenbrück (DE)
(74) Vertreter: Patentanwaltskanzlei WILHELM & BECK
(86) Internationale Anmeldenummer: PCT/EP2020/082075
(87) Internationale Veröffentlichungsnummer: WO 2021/104897

(56) Entgegenhaltungen:
- EP-A1- 2 216 938
- EP-B1- 2 216 938
- DE-A1-102006 018 884
- US-A1- 2007 274 208
- US-A1- 2016 344 629

## Beschreibung

Die Erfindung betrifft ein Automatisierungsnetzwerk. Des Weiteren betrifft die Erfindung ein Verfahren zur Datenübertragung in dem Automatisierungsnetzwerk.

Automatisierungsnetzwerke werden häufig als "Feldbussysteme" betrieben. Dies sind industrielle Bussysteme, die eine echtzeitfähige Steuerung der Maschinen oder Anlagen des Automatisierungsnetzwerks ermöglichen, wobei die Maschinen oder Anlagen des Automatisierungsnetzwerks mithilfe von speicherprogrammierbaren Steuerungen (SPS) gesteuert werden. Zur Kommunikation der Feldgeräte, also beispielsweise Sensoren und Aktoren der Maschinen oder Anlagen des Automatisierungsnetzwerks mit der SPS, nutzt die SPS das Feldbussystem. Senden mehrere Netzwerkteilnehmer Telegramme über dieselbe Datenleitung in dem Automatisierungsnetzwerk, die als leitungsgebundenes oder drahtloses Bussystem ausgebildet sein kann, so muss es eine Möglichkeit geben, damit sich die Netzwerkteilnehmer dieselbe Datenleitung für die Datenübertragung teilen können. Zu diesem Zweck gibt es festgelegte Hierarchien und normierte Protokolle.

Meist arbeiten die Feldbussysteme im sogenannten "Master-Slave-Betrieb". Das heißt, wenigstens ein Netzwerkteilnehmer ist als ein Masterteilnehmer ausgebildet und übernimmt die Steuerung der Prozesse, während die übrigen Netzwerkteilnehmer, die mehrere Slaveteilnehmer umfassen können, die Abarbeitung von Teilaufgaben im Steuerungsbetrieb des Automatisierungsnetzwerks übernehmen. Der Austausch von Daten erfolgt dabei im Automatisierungsnetzwerk mithilfe von Telegrammen, die vom Masterteilnehmer an die Slaveteilnehmer ausgegeben werden. Die Slaveteilnehmer lesen die an sie adressierten Ausgangsdaten aus dem Telegramm und legen ihre Eingangsdaten in das Telegramm und senden das Telegramm an den Masterteilnehmer zurück.

Häufig sind die Automatisierungsnetzwerke als Ethernet basierte Netzwerke ausgebildet, beziehungsweise als Ethernet basierter Feldbus. Das heißt, das dem Telegrammverkehr im Automatisierungsnetzwerk zugrundeliegende echtzeitfähige Protokoll kann beispielsweise das EtherCAT Protokoll bilden. Ein Automatisierungsnetzwerk mit zugrundeliegendem EtherCAT Protokoll, nachfolgend kurz EtherCAT Netzwerk genannt, das aus dem Stand der Technik bekannt ist, umfasst eine direkte Verbindung zwischen dem Masterteilnehmer und den einzelnen Netzwerkteilnehmern bzw. Slaveteilnehmern. Der Masterteilnehmer und die Netzwerkteilnehmer bzw. Slaveteilnehmer sind also jeweils über eine Punkt-zu-Punkt Verbindung ohne Zwischenstationen, zum Beispiel in Form von Netzwerkverteilern, über ein Datenleitungsnetz miteinander verbunden. Ein Telegramm vom Masterteilnehmer durchläuft nacheinander alle an das Datenleitungsnetz angeschlossenen Slaveteilnehmer, diese verarbeiten das Telegramm jeweils im Durchlauf und der letzte Slaveteilnehmer sendet das Telegramm wieder über das Datenleitungsnetz an den Masterteilnehmer zurück.

Im Fehlerbetrieb, das heißt im Falle einer aufgetretenen Leitungsstörung, beispielsweise durch physikalische Unterbrechung des Übertragungsmediums, kann der Masterteilnehmer auf diese Weise nur den Teil der Slaveteilnehmer über das Datenleitungsnetz ansprechen, der sich vor der Störungsstelle befindet.

In der EP 1869836 B1 ist ein Verfahren beschrieben, bei dem der letzte Slaveteilnehmer wieder mit dem Masterteilnehmer über ein redundantes Datenleitungsnetz verbunden ist. Der Masterteilnehmer sendet ein erstes Telegramm an den ersten Slaveteilnehmer, das die restlichen Slaveteilnehmer nacheinander durchläuft, und ein zweites Telegramm an den letzten Slaveteilnehmer, das die restlichen Slaveteilnehmer nacheinander in gegenläufiger Richtung durchläuft. Das Verfahren stellt insbesondere sicher, dass der Masterteilnehmer im Fehlerbetrieb sowohl die Slaveteilnehmer vor der Störungsstelle als auch die Slaveteilnehmer, die vom Masterteilnehmer ausgehend betrachtet nach der Störungsstelle angeordnet sind, mittels Telegrammen ansprechen kann.

Wird das EtherCAT Netzwerk mit redundantem Datenleitungsnetz durch Netzwerkverteiler erweitert, die als sogenannte Switche oder Branche ausgebildet sein können, so kann das oben genannte Verfahren nur noch eingeschränkt auf die Bereiche des EtherCAT Netzwerks angewandt werden, in denen sich lediglich Slaveteilnehmer befinden. Eine Kommunikation des Masterteilnehmers mittels Telegrammen mit allen Slaveteilnehmern kann somit im Fehlerbetrieb nicht aufrechterhalten werden.

Die Druckschrift DE 10 2006 018884 A1 offenbart ein Automatisierungsnetzwerk mit einer Master-Slave-Struktur, also mit einem Masterteilnehmer 1 und einer Mehrzahl von Slaveteilnehmern 3. Die Mehrzahl an Slaveteilnehmern 3 ist über einen ersten Kommunikationspfad 21 und einen zweiten Kommunikationspfad 22 in einer gegenläufig arbeitenden Doppelringstruktur miteinander verbunden. Eine Schnittstelleneinheit 4 mit einer Schalteinheit 41 ist ausgelegt, ein vom Masterteilnehmer 1 über eine Sendeeinheit TX 11 ausgegebenes Informationssignal zum getrennten gegenläufigen Senden auf dem ersten Kommunikationspfad 21 und dem zweiten Kommunikationspfad 22 auszugeben.

Eine zweite Schalteinheit 42 der Schnittstelleneinheit 4 ist ausgelegt, die beiden auf dem ersten und zweiten Kommunikationspfad 21, 22 gegenläufig umlaufenden Informationssignale an eine Empfangseinheit RX 12 des Masterteilnehmers 1 weiterzuleiten.

Es ist daher Aufgabe der vorliegenden Erfindung, ein optimiertes Automatisierungsnetzwerk anzugeben, das die Ausfallsicherheit verbessert. Es ist weiterhin Aufgabe der Erfindung ein verbessertes Verfahren zur Datenübertragung in dem vorgeschlagenen Automatisierungsnetzwerk bereitzustellen.

Diese Aufgabe wird durch die Merkmale der unabhängigen Ansprüche gelöst. Weitere vorteilhafte Ausführungsformen der Erfindung sind in den abhängigen Ansprüchen angegeben.

Erfindungsgemäß werden ein Automatisierungsnetzwerk sowie ein Verfahren zur Datenübertragung in dem Automatisierungs-netzwerk vorgeschlagen. Das Automatisierungsnetzwerk weist mehrere Netzwerkteilnehmer auf, die wenigstens einen Masterteilnehmer, wenigstens eine Vermittlungseinrichtung und wenigstens einen Slaveteilnehmer umfassen. Der Masterteilnehmer umfasst Master-Ports, die Vermittlungseinrichtung umfasst Vermittler-Ports und der Slaveteilnehmer umfasst Slave-Ports, die jeweils eine Sendeeinheit zum Senden von Telegrammen und eine Empfangseinheit zum Empfangen von Telegrammen umfassen. Die Sendeeinheit eines ersten Master-Ports ist über einen ersten Master-Kommunikationspfad mit der Empfangseinheit eines ersten Vermittler-Ports und die Sendeeinheit eines zweiten Vermittler-Ports ist über den ersten Master-Kommunikationspfad mit der Empfangseinheit eines zweiten Master-Ports verbunden. Die Sendeinheit des zweiten Master-Ports ist über einen zweiten Master-Kommunikationspfad mit der Empfangseinheit des zweiten Vermittler-Ports und die Sendeeinheit des ersten Vermittler-Ports ist über den zweiten Master-Kommunikationspfad mit der Empfangseinheit des ersten Master-Ports verbunden, um eine erste Doppelringstruktur auszubilden. Die Sendeeinheit eines dritten Vermittler-Ports ist über einen ersten Slave-Kommunikationspfad mit der Empfangseinheit eines ersten Slave-Ports und die Sendeeinheit eines zweiten Slave-Ports ist über den ersten Slave-Kommunikationspfad mit der Empfangseinheit eines vierten Vermittler-Ports verbunden. Die Sendeeinheit des vierten Vermittler-Ports ist über einen zweiten Slave-Kommunikationspfad mit der Empfangseinheit des zweiten Slave-Ports und die Sendeeinheit des ersten Slave-Ports ist über den zweiten Slave-Kommunikationspfad mit der Empfangseinheit des dritten Vermittler-Ports verbunden, um eine zweite Doppelringstruktur auszubilden.

Der Masterteilnehmer ist ausgelegt, zwei Telegramme zu versenden, die auf dem gleichen Datenpaket basieren. Der Masterteilnehmer ist ausgelegt, ein erstes Telegramm über die Sendeeinheit des ersten Master-Ports und über den ersten Master-Kommunikationspfad an die Vermittlungseinrichtung auszugeben, und ein zweites Telegramm über die Sendeeinheit des zweiten Master-Ports und über den zweiten Master-Kommunikationspfad an die Vermittlungseinrichtung auszugeben. Die Vermittlungseinrichtung ist ausgelegt, das erste Telegramm über die Empfangseinheit des ersten Vermittler-Ports zu empfangen und über die Sendeeinheit des dritten Vermittler-Ports über den ersten Slave-Kommunikationspfad an die Empfangseinheit des ersten Slave-Ports weiterzuleiten. Der Slaveteilnehmer ist ausgelegt, das erste Telegramm nach der Verarbeitung im Durchlauf über die Sendeeinheit des zweiten Slave-Ports über den ersten Slave-Kommunikationspfad an die Empfangseinheit des vierten Vermittler-Ports weiterzuleiten. Die Vermittlungseinrichtung ist ausgelegt, das über die Empfangseinheit des vierten Vermittler-Ports empfangene erste Telegramm über die Sendeeinheit des zweiten Vermittler-Ports über den ersten Master-Kommunikationspfad an die Empfangseinheit des zweiten Master-Ports weiterzuleiten. Die Vermittlungseinrichtung ist ausgelegt, das zweite Telegramm über die Empfangseinheit des zweiten Vermittler-Ports zu empfangen und über die Sendeeinheit des vierten Vermittler-Ports über den zweiten Slave-Kommunikationspfad an die Empfangseinheit des zweiten Slave-Ports weiterzuleiten.

Der Slaveteilnehmer ist ausgelegt, das zweite Telegramm über die Sendeeinheit des ersten Slave-Ports über den zweiten Slave-Kommunikationspfad an die Empfangseinheit des dritten Vermittler-Ports weiterzuleiten. Die Vermittlungseinrichtung ist ausgelegt, das über die Empfangseinheit des dritten Vermittler-Ports empfangene zweite Telegramm über die Sendeeinheit des ersten Vermittler-Ports über den zweiten Master-Kommunikationspfad an die Empfangseinheit des ersten Master-Ports weiterzuleiten. Die Vermittlungseinrichtung und der Slaveteilnehmer sind im Fehlerbetrieb ausgelegt, das erste Telegramm an den Masterteilnehmer zurückzusenden, sodass der Masterteilnehmer das erste Telegramm über die Empfangseinheit des ersten Master-Ports empfängt und/oder das zweite Telegramm an den Masterteilnehmer zurückzusenden, sodass der Masterteilnehmer das zweite Telegramm über die Empfangseinheit des zweiten Master-Ports empfängt.

Trotz des Fehlerbetriebs, der eine Leitungsstörung der ersten Doppelringstruktur, d.h. zum Beispiel eine physikalische Unterbrechung des Übertragungsmediums auf dem ersten Master-Kommunikationspfad und/oder eine Unterbrechung auf dem zweiten Master-Kommunikationspfad, umfassen kann und/oder eine Leitungsstörung der zweiten Doppelringstruktur, d.h. eine physikalische Unterbrechung des Übertragungsmediums auf dem ersten Slave-Kommunikationspfad und/oder eine physikalische Unterbrechung des Übertragungsmediums auf dem zweiten Slave-Kommunikationspfad, kann ein sicherer Betrieb des Automatisierungsnetzwerks aufrechterhalten werden. Durch das vorgeschlagene Automatisierungsnetzwerk mit der redundanten Doppelringtopologie wird folglich eine verbesserte Ausfallsicherheit geboten und eine Echtzeitanforderung für das Automatisierungsnetzwerk garantiert. Das vorgeschlagene Automatisierungsnetzwerk ist dadurch vorteilhafterweise nicht nur auf eine Master-Slave-Struktur eingeschränkt, sondern kann durch eine Vermittlungseinrichtung, die einen und/oder mehrere Netzwerkverteiler, d.h. Switche oder Branche umfassen kann, erweitert werden und garantiert trotz des Fehlerbetriebs weiterhin eine Kommunikation zwischen dem Masterteilnehmer mit dem Slaveteilnehmer, sodass der Masterteilnehmer jeden Netzwerkteilnehmer erreichen kann, sofern der Netzwerkteilnehmer noch über einen Kommunikationspfad mit dem Masterteilnehmer verbunden ist.

Insbesondere kann durch das vorgeschlagene Verfahren der Telegrammverkehr im Automatisierungsnetzwerk gegenüber anderen Redundanzverfahren reduziert, das heißt der Overhead im Automatisierungsnetzwerk halbiert werden, da bei anderen Redundanzverfahren das entsprechende Telegramm grundsätzlich an einer Verzweigung, also einem Switch, verdoppelt wird, unbeachtet dessen, ob im Automatisierungsnetzwerk eine Leitungsstörung auftritt oder nicht.

In einer weiteren Ausführungsform sind mehrere Slaveteilnehmer vorgesehen, die in einer Kette angeordnet sind. Die Slaveteilnehmer in der Kette sind jeweils über den ersten Slave-Port und über den zweiten Slave-Port verbunden. Die Kette an Slaveteilnehmern ist über den ersten Slave-Kommunikationspfad und über den zweiten Slave-Kommunikationspfad mit dem dritten Vermittler-Port und mit dem vierten Vermittler-Port verbunden. An die zweite Doppelringstruktur kann eine Kette von Slaveteilnehmern angeschlossen sein und mit dem dritten Vermittler-Port und dem vierten Vermittler-Port verbunden sein. Vorteilhafterweise unterscheidet sich das Verhalten eines Slaveteilnehmers in der Kette im Fehlerbetrieb nicht von dem Verhalten im Normalbetrieb, d.h. ohne Leitungsstörung. Denn ein Slaveteilnehmer in der Kette verarbeitet ein Telegramm mittels einer integrierten Verarbeitungseinheit im Durchlauf, und zwar lediglich auf dem Hinweg des Telegramms, der zum Beispiel durch den ersten Slave-Kommunikationspfad gebildet sein kann, während der letzte Slaveteilnehmer das Telegramm aufgrund eines kurzgeschlossenen zweiten Slave-Ports zum Beispiel über den zweiten Slave-Kommunikationspfad an den Masterteilnehmer zurücksendet.

Bei einer Leitungsstörung zwischen zwei benachbarten Slaveteilnehmern in der Kette erkennt der an die Störung angrenzende Slaveteilnehmer, wobei der angrenzende Slaveteilnehmer zum Beispiel benachbart zur unterbrochenen Datenleitung, das heißt zur entsprechenden Störung angeordnet sein kann, dass keine Verbindung zu einem nachfolgenden Slaveteilnehmer besteht, sodass der angrenzende Slaveteilnehmer die Sendeeinheit des zweiten Slave-Ports mit der Empfangseinheit des zweiten Slave-Ports kurzschließt, um das Telegramm über den zweiten Slave-Kommunikationspfad zurückzusenden. Der zweite Slave-Kommunikationspfad ist dabei zum Beispiel mit der Empfangseinheit des zweiten Slave-Ports verbunden.

In einer weiteren Ausführungsform sind mehrere Vermittlungseinrichtungen vorgesehen, die in einer Kette angeordnet sind. Die Kette an Vermittlungseinrichtungen ist über den ersten Master-Kommunikationspfad und über den zweiten Master-Kommunikationspfad mit dem ersten Master-Port und dem zweiten Master-Port verbunden. Das erste Telegramm und/oder das zweite Telegramm weisen jeweils eine Adressinformation auf, die der entsprechenden Vermittlungseinrichtung anzeigt, ob das erste Telegramm für den ersten Slave-Kommunikationspfad und/oder ob das zweite Telegramm für den zweiten Slave-Kommunikationspfad und/oder ob das erste Telegramm für den ersten Master-Kommunikationspfad und/oder ob das zweite Telegramm für den zweiten Master-Kommunikationspfad bestimmt ist.

Das vorgeschlagene Automatisierungsnetzwerk kann vorteilhaft mehrere Vermittlungseinrichtungen umfassen, an die jeweils eine Kette von Slaveteilnehmern in einer Doppelringstruktur anschließbar ist. Durch das vorgeschlagene Automatisierungsnetzwerk kann eine einfache Erweiterbarkeit des Netzwerks garantiert werden, wobei gleichzeitig die Ausfallsicherheit des Automatisierungsnetzwerks weiterhin gewahrt bleibt. Zudem bietet das vorgeschlagene Automatisierungsnetzwerk samt dem Verfahren den Vorteil, dass eine Anpassung an individuelle Systembedürfnisse möglich ist. Durch die Adressinformation im Telegramm kann das jeweilige Telegramm rasch im Automatisierungsnetzwerk an den für das Telegramm bestimmten Netzwerkteilnehmer weitergeleitet werden.

In einer weiteren Ausführungsform umfasst die Vermittlungseinrichtung einen ersten Netzwerkverteiler und einen zweiten Netzwerkverteiler, die jeweils mehrere Verteiler-Ports aufweisen. Ein erster Verteiler-Port des ersten Netzwerkverteilers entspricht dem ersten Vermittler-Port der Vermittlungseinrichtung und ein zweiter Verteiler-Port des ersten Netzwerkverteilers entspricht dem dritten Vermittler-Port der Vermittlungseinrichtung. Der erste Netzwerkverteiler ist über einen dritten Verteiler-Port des ersten Netzwerkverteilers mit einem ersten Verteiler-Port des zweiten Netzwerkverteilers verbunden.

Die Vermittlungseinrichtung kann einen ersten und einen zweiten Netzwerkverteiler umfassen, wobei der erste Netzwerkverteiler und der zweite Netzwerkverteiler ausgelegt sein können, Telegramme über die Verteiler-Ports und aufgrund der Adressinformation der Telegramme an die Netzwerkteilnehmer auszugeben, für die Telegramme bestimmt sind. Die Netzwerkverteiler können als Switche oder als Branche ausgebildet sein, sodass deren Funktion vorteilhaft genutzt werden kann. Insbesondere kann dadurch die Kompatibilität der Netzwerkteilnehmer im Automatisierungsnetzwerk verbessert werden.

In einer weiteren Ausführungsform ist ein an eine Störung angrenzender Netzwerkverteiler und/oder eine an eine Störung angrenzende Vermittlungseinrichtung im Fehlerbetrieb ausgelegt, eine erste Fehlerinformation für das erste Telegramm und/oder eine zweite Fehlerinformation für das zweite Telegramm zu setzen und das erste Telegramm mit der ersten Fehlerinformation über den zweiten Master-Kommunikationspfad und/oder das zweite Telegramm mit der zweiten Fehlerinformation über den ersten Master-Kommunikationspfad an den Masterteilnehmer zurückzusenden.

Die an die Störung angrenzende Vermittlungseinrichtung, d.h. die Vermittlungseinrichtung, die die Störung, die insbesondere in Form einer Leitungsstörung ausgebildet sein kann, auf dem ersten Master-Kommunikationspfad und/oder auf dem zweiten Master-Kommunikationspfad zu einer nachfolgenden Vermittlungseinrichtung erkennt, kann eine Fehlerinformation für das entsprechende Telegramm setzen. Gleichermaßen kann der an die Störung angrenzende Netzwerkverteiler, d.h. der Netzwerkverteiler, der die Störung, die gleichermaßen als Leitungsstörung ausgebildet sein kann, auf dem ersten Master-Kommunikationspfad und/oder auf dem zweiten Master-Kommunikationspfad zu einer nachfolgenden Vermittlungseinrichtung erkennt, kann eine Fehlerinformation für das entsprechende Telegramm setzen. Die Fehlerinformation kann auch ein Ändern der Telegrammadresse in eine alternative Telegrammadresse umfassen. Der Masterteilnehmer konfiguriert die Vermittlungseinrichtung bzw. den entsprechenden Netzwerkverteiler derart, dass der Telegrammpfad für den Normalbetrieb eingestellt ist sowie ein alternativer Telegrammpfad für den Fehlerbetrieb, wobei das Einstellen des Telegrammpfads für den Normalbetrieb eine Zuordnung der Vermittler-Ports bzw. der Verteiler-Ports zur Telegrammadresse für die Ausgabe des Telegramms umfasst. Weiterhin umfasst das Einstellen des alternativen Telegrammpfads zum Beispiel das Ändern der Telegrammadresse auf die alternative Telegrammadresse, wodurch die aufgetretene Störung angezeigt werden kann, sowie die Zuordnung der Vermittler-Ports bzw. der Verteiler-Ports zur geänderten Telegrammadresse für die Ausgabe des Telegramms.

In einer weiteren Ausführungsform sind der an eine Störung angrenzende Netzwerkverteiler und/oder die an eine Störung angrenzende Vermittlungseinrichtung und/oder ein an eine Störung angrenzender Slaveteilnehmer im Fehlerbetrieb ausgelegt, sofern das erste Telegramm bereits die erste Fehlerinformation und/oder das zweite Telegramm bereits die zweite Fehlerinformation aufweist, das erste Telegramm mit der ersten Fehlerinformation und/oder das zweite Telegramm mit der zweiten Fehlerinformation zu verwerfen. Durch das Verwerfen eines Telegramms bei bereits festgestellter Fehlerinformation im entsprechenden Telegramm kann in vorteilhafter Weise vermieden werden, dass das jeweilige Telegramm im Automatisierungsnetzwerk umläuft und unnötige Kapazität beansprucht sowie das Übertragungsmedium belegt. Insbesondere können der an eine Störung angrenzende Netzwerkverteiler und/oder die an eine Störung angrenzende Vermittlungseinrichtung und/oder der an eine Störung angrenzende Slaveteilnehmer hierbei vorteilhaft zur Erkennung einer Leitungsstörung im Automatisierungsnetzwerk eingesetzt werden.

In einer weiteren Ausführungsform ist ein Slaveteilnehmer zwischen einer ersten Vermittlungseinrichtung und einer zweiten Vermittlungseinrichtung und/oder zwischen einem ersten Netzwerkverteiler und einem zweiten Netzwerkverteiler angeordnet. Der Slaveteilnehmer ist im Fehlerbetrieb ausgelegt, die erste Fehlerinformation für das erste Telegramm und/oder die zweite Fehlerinformation für das zweite Telegramm zu setzen und das erste Telegramm mit der ersten Fehlerinformation über den zweiten Master-Kommunikationspfad und/oder das zweite Telegramm mit der zweiten Fehlerinformation über den ersten Master-Kommunikationspfad an den Masterteilnehmer zurückzusenden. Hierdurch ist eine flexible Gestaltung des Automatisierungsnetzwerks möglich, da der Slaveteilnehmer auch zwischen zwei benachbarten Vermittlungseinrichtungen sowie zwischen zwei benachbarten Netzwerkverteilern angeordnet sein können. In vorteilhafter Weise kann auch ein Slaveteilnehmer zum Setzen der Fehlerinformation ausgelegt sein, die in ähnlicher Weise zur obigen Erläuterung umgesetzt sein kann, also zum Beispiel durch das Ändern der Telegrammadresse.

In einer weiteren Ausführungsform erkennen die Vermittlungseinrichtung und der Slaveteilnehmer eine Störung auf dem ersten Master-Kommunikationspfad und/oder auf dem zweiten Master-Kommunikationspfad und/oder auf dem ersten Slave-Kommunikationspfad und/oder auf dem zweiten Slave-Kommunikationspfad und stoßen den Fehlerbetrieb an. Ferner ist denkbar, dass auch ein Netzwerkverteiler zur Erkennung der Störung auf dem ersten Master-Kommunikationspfad und/oder auf dem zweiten Master-Kommunikationspfad und/oder auf dem ersten Slave-Kommunikationspfad und/oder auf dem zweiten Slave-Kommunikationspfad ausgelegt ist und den Fehlerbetrieb anzustoßen. In vorteilhafter Weise sind sowohl die Vermittlungseinrichtung als auch ein Slaveteilnehmer ausgelegt, den Fehlerbetrieb durch Setzen der Fehlerinformation im entsprechenden Telegramm anzustoßen, sofern eine Leitungsstörung, zum Beispiel eine Unterbrechung, erkannt worden ist. Diese Eigenschaft kann durch einen Netzwerkteilnehmer gleichermaßen erfüllt sein.

In einer weiteren Ausführungsform sind das erste Telegramm und das zweite Telegramm jeweils als EtherCAT Telegramme ausgebildet. Der bekannte EtherCAT Standard kann vorteilhaft genutzt werden, sofern die Telegramme als EtherCAT Telegramme ausgebildet sind. Insbesondere kann durch die Verwendung des echtzeitfähigen Datenübertragungsprotokolls die Echtzeitfähigkeit des Automatisierungsnetzwerks sichergestellt werden.

Die vorstehend erläuterten und/oder in den Unteransprüchen wiedergegebenen vorteilhaften Aus- und Weiterbildungen der Erfindung können - außer zum Beispiel in Fällen eindeutiger Abhängigkeiten oder unvereinbarer Alternativen - einzeln oder aber auch in beliebiger Kombination miteinander zur Anwendung kommen.

Die oben beschriebenen Eigenschaften, Merkmale und Vorteile dieser Erfindung, sowie die Art und Weise, wie diese erreicht werden, werden klarer und deutlicher verständlich in Zusammenhang mit der folgenden Beschreibung von Ausführungsbeispielen, die im Zusammenhang mit den schematischen Zeichnungen näher erläutert werden. Es zeigen:
Figur 1 einen schematischen Aufbau eines Automatisierungsnetzwerks mit Netzwerkteilnehmern gemäß einer ersten Ausführungsform;
Figur 2 einen schematischen Aufbau eines Automatisierungsnetzwerks mit Netzwerkteilnehmern gemäß einer zweiten Ausführungsform;
Figur 3 einen schematischen Aufbau eines Automatisierungsnetzwerks mit Netzwerkteilnehmern gemäß einer dritten Ausführungsform; und
Figur 4 einen schematischen Aufbau eines Automatisierungsnetzwerks mit Netzwerkteilnehmern gemäß einer vierten Ausführungsform.

Es wird darauf hingewiesen, dass die Figuren lediglich schematischer Natur und nicht maßstabsgetreu sind. In diesem Sinne können in den Figuren gezeigte Komponenten und Elemente zum besseren Verständnis übertrieben groß oder verkleinert dargestellt sein. Ferner wird darauf hingewiesen, dass die Bezugszeichen in den Figuren unverändert gewählt worden sind, wenn es sich um gleich ausgebildete Elemente und/oder Komponenten handelt.

Automatisierungsnetzwerke 100 sind üblicherweise als Feldbussysteme verwirklicht, bei denen die Netzwerkteilnehmer 200 über den Feldbus miteinander vernetzt sind. Das Automatisierungsnetzwerk 100 kann einen Masterteilnehmer 205, wenigstens eine Vermittlungseinrichtung 210 und mehrere Slaveteilnehmer 215 aufweisen. Der Masterteilnehmer 205 kann mit der Vermittlungseinrichtung 210 und die Vermittlungseinrichtung 210 mit den mehreren Slaveteilnehmern 215 über ein redundantes Datenleitungsnetz verbunden sein, wobei das redundante Datenleitungsnetz zum Beispiel zwei physikalische Übertragungsmedien umfassen kann, zum gegenläufigen Übertragen eines ersten Telegramms 220 und eines zweiten Telegramms 225 des Masterteilnehmers 205 an die Vermittlungseinrichtung 210 bzw. an die mehreren Slaveteilnehmer 215. Durch das redundante Datenleitungsnetz kann insbesondere im Fehlerbetrieb, beispielsweise durch physikalische Unterbrechung des Übertragungsmediums, sichergestellt werden, dass der Masterteilnehmer 205 weiterhin mit allen Slaveteilnehmern 215 kommunizieren kann.

Die Erfindung wird nachfolgend beispielhaft anhand des echtzeitfähigen EtherCAT Protokolls erläutert und ist nicht auf eine Master-Slave-Hierarchie beschränkt.

Nachfolgend wird unter dem Begriff im Durchlauf ("on the fly") verstanden, dass eine Verarbeitungseinheit eines Slaveteilnehmers 215 ausgelegt ist, mit der Verarbeitung eines Telegramms zu beginnen, bevor das Telegramm vollständig über einen ersten Slave-Port 600 des Slaveteilnehmers 215 empfangen worden ist. Wird nachfolgend von der Verarbeitung eines Telegramms im Durchlauf gesprochen, so ist damit das Auslesen der an den jeweiligen Slaveteilnehmer 215 adressierten Ausgangsdaten, sowie das Einfügen von Eingangsdaten in das Telegramm und im Normalbetrieb des Automatisierungsnetzwerks 100 das Weiterleiten des Telegramms an den nachfolgenden Slaveteilnehmer 215 mit umfasst.

Nachfolgend wird unter dem Begriff Normalbetrieb der Zustand bzw. die Betriebsweise des Automatisierungsnetzwerks 100 verstanden, bei der keinerlei Störung auftritt.

Nachfolgend wird unter dem Begriff Fehlerbetrieb der Zustand bzw. die Betriebsweise des Automatisierungsnetzwerks 100 verstanden, bei der im Automatisierungsnetzwerk 100 eine Leitungsstörung, die in Form einer physikalischen Unterbrechung des Übertragungsmediums ausgebildet sein kann, auftritt und die eine durchgängige Kommunikation des Masterteilnehmers 205 mit den Slaveteilnehmern 215 behindert.

Nachfolgend wird unter einem ersten Telegramm 220, einem zweiten Telegramm 225, einem dritten Telegramm 282 sowie einem vierten Telegramm 284 jeweils ein EtherCAT Telegramm verstanden, das heißt, das den Telegrammen zugrundeliegende echtzeitfähige Protokoll bildet das EtherCAT Protokoll. Ein EtherCAT Telegramm ist dabei in einen Ethernet Datenframe eingebettet und weist folglich den Ethernet Datenframe Format Aufbau nach der IEEE 802.3 Norm bzw. mit einem Tag-Feld nach der IEEE 802.1Q Norm auf. Wird also nachfolgend nur von einem der oben genannten Telegramme oder einem Telegramm bzw. einem EtherCAT Telegramm gesprochen, so ist damit der Ethernet Datenframe bzw. der Datenframe mit umfasst.

Die Kernidee der vorliegenden Erfindung liegt in der Bereitstellung eines Verfahrens und eines Automatisierungsnetzwerks 100 mit Netzwerkteilnehmern 200, das es bei Verwendung wenigstens einer Vermittlungseinrichtung 210 und eines redundanten Datenleitungsnetzes erlaubt, dass die Telegramme des Masterteilnehmers 205 von den Slaveteilnehmern 215 und/oder von der Vermittlungseinrichtung 210 im Fehlerbetrieb, das heißt im Falle einer physikalischen Unterbrechung des Übertragungsmediums, an den Masterteilnehmer 205 zurückgesandt werden und dadurch eine Kommunikation des Masterteilnehmers 205 mit allen anderen Netzwerkteilnehmern 200 garantiert werden kann.

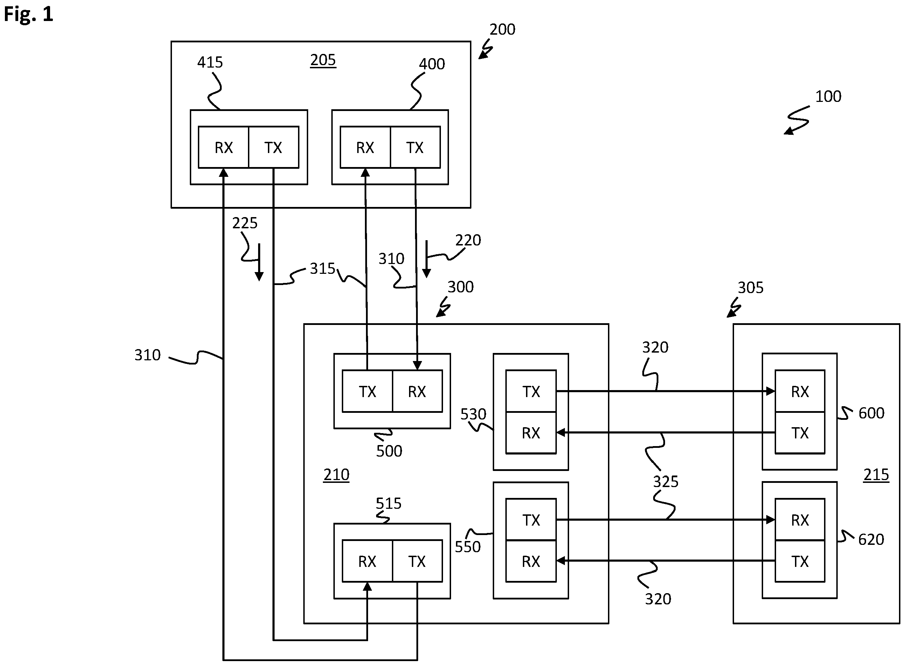

Der Aufbau und die Funktionsweise des erfindungsgemäßen Automatisierungsnetzwerks 100 wird nachfolgend anhand der Figuren 1 bis 4 beschrieben, wobei in der Beschreibung, sofern sinnvoll und erforderlich, die zugehörigen Bezugszeichen aus den vier Figuren Verwendung finden.

Figur 1 zeigt ein Automatisierungsnetzwerk 100, das mehrere Netzwerkteilnehmer 200 umfasst, wobei wenigstens ein Netzwerkteilnehmer 200 als ein Masterteilnehmer 205, wenigstens ein Netzwerkteilnehmer 200 als eine Vermittlungseinrichtung 210 und mehrere Netzwerkteilnehmer 200 als Slaveteilnehmer 215 ausgebildet sein können. Beispielsweise ist in Figur 1 ein Slaveteilnehmer 215 dargestellt. Der Masterteilnehmer 205 umfasst einen ersten Master-Port 400 sowie einen zweiten Master-Port 415. Die Vermittlungseinrichtung 210 weist einen ersten Vermittler-Port 500 sowie einen zweiten Vermittler-Port 515 und einen dritten Vermittler-Port 530 und einen vierten Vermittler-Port 550 auf. Der Slaveteilnehmer 215 umfasst einen ersten Slave-Port 600 sowie einen zweiten Slave-Port 620. Die genannten Ports weisen jeweils eine Sendeeinheit TX zum Senden von Telegrammen und eine Empfangseinheit RX zum Empfangen von Telegrammen auf.

Die Sendeeinheit TX des ersten Master-Ports 400 ist über einen ersten Master-Kommunikationspfad 310 mit der Empfangseinheit RX des ersten Vermittler-Ports 500 verbunden. Weiterhin ist die Sendeeinheit TX des zweiten Vermittler-Ports 515 über den ersten Master-Kommunikationspfad 310 mit der Empfangseinheit RX des zweiten Master-Ports 415 verbunden. Die Sendeeinheit TX des zweiten Master-Ports 415 ist über einen zweiten Master-Kommunikationspfad 315 mit der Empfangseinheit RX des zweiten Vermittler-Ports 515 verbunden. Überdies ist die Sendeeinheit TX des ersten Vermittler-Ports 500 über den zweiten Master-Kommunikationspfad 315 mit der Empfangseinheit RX des ersten Master-Ports 400 verbunden. Der Masterteilnehmer 205 bildet über den ersten Master-Port 400 sowie den zweiten Master-Port 415 demnach mit dem ersten Master-Kommunikationspfad 310 sowie mit dem zweiten Master-Kommunikationspfad 315 und dem ersten Vermittler-Port 500 sowie dem zweiten Vermittler-Port 515 der Vermittlungseinrichtung 210 eine erste Doppelringstruktur 300.

Weiterhin ist die Sendeeinheit TX des dritten Vermittler-Ports 530 über einen ersten Slave-Kommunikationspfad 320 mit der Empfangseinheit RX des ersten Slave-Ports 600 verbunden. Die Sendeeinheit TX des zweiten Slave-Ports 620 ist über den ersten Slave-Kommunikationspfad 320 mit der Empfangseinheit RX des vierten Vermittler-Ports 550 verbunden. Die Sendeeinheit TX des ersten Slave-Ports 600 ist ferner über einen zweiten Slave-Kommunikationspfad 325 mit der Empfangseinheit RX des dritten Vermittler-Ports 530 verbunden. Ebenso ist die Sendeeinheit TX des vierten Vermittler-Ports 550 über den zweiten Slave-Kommunikationspfad 325 mit der Empfangseinheit RX des zweiten Slave-Ports 620 verbunden. Der Slaveteilnehmer 215 bildet über den ersten Slave-Port 600, über den zweiten Slave-Port 620, über den ersten Slave-Kommunikationspfad 320 und über den zweiten Slave-Kommunikationspfad 325 mit der Vermittlungseinrichtung 210 eine zweite Doppelringstruktur 305 mit der Vermittlungseinrichtung 210 aus.

Der Masterteilnehmer 205 ist ausgelegt, zwei Telegramme zu versenden, die auf dem gleichen Datenpaket basieren. Der Masterteilnehmer 205 gibt dazu ein erstes Telegramm 220 über die Sendeeinheit TX des ersten Master-Ports 400 über den ersten Master-Kommunikationspfad 310 an die Empfangseinheit RX des ersten Vermittler-Ports 500 aus. Die Vermittlungseinrichtung 210 ist ausgelegt, das erste Telegramm 220 über die Empfangseinheit RX des ersten Vermittler-Ports 500 zu empfangen. Weiterhin ist die Vermittlungseinrichtung 210 ausgelegt, das erste Telegramm 220 über die Sendeeinheit TX des dritten Vermittler-Ports 530 über den ersten Slave-Kommunikationspfad 320 an die Empfangseinheit RX des ersten Slave-Ports 600 auszugeben. Der Slaveteilnehmer 215 ist ausgelegt, das erste Telegramm 220 im Durchlauf zu verarbeiten, wobei eine Verarbeitungseinheit in Figur 1 aus Übersichtlichkeitsgründen nicht dargestellt ist.

Der Slaveteilnehmer 215 ist nach der Verarbeitung des ersten Telegramms 220 ausgelegt, das erste Telegramm 220 über die Sendeeinheit TX des zweiten Slave-Ports 620 über den ersten Slave-Kommunikationspfad 320 an die Empfangseinheit RX des vierten Vermittler-Ports 550 auszugeben. Die Vermittlungseinrichtung 210 ist ausgelegt, das erste Telegramm 220 über die Empfangseinheit RX des vierten Vermittler-Ports 550 zu empfangen, und über die Sendeeinheit TX des zweiten Vermittler-Ports 515 über den ersten Master-Kommunikationspfad 310 an die Empfangseinheit RX des zweiten Master-Ports 415 zu senden. Der Masterteilnehmer 205 ist schließlich ausgelegt, das erste Telegramm 220 über die Empfangseinheit TX des zweiten Master-Ports 415 zu empfangen. Weiterhin kann der Masterteilnehmer 205 zum Auswerten des ersten Telegramms 220 ausgelegt sein.

Der Masterteilnehmer 205 ist überdies ausgelegt, ein zweites Telegramm 225 über die Sendeeinheit TX des zweiten Master-Ports 415 über den zweiten Master-Kommunikationspfad 315 an die Empfangseinheit RX des zweiten Vermittler-Ports 515 auszugeben. Die Vermittlungseinrichtung 210 ist ausgelegt, das zweite Telegramm 225 über die Empfangseinheit RX des zweiten Vermittler-Ports 515 zu empfangen und über die Sendeeinheit TX des vierten Vermittler-Ports 550 über den zweiten Slave-Kommunikationspfad 325 an die Empfangseinheit RX des zweiten Slave-Ports 620 auszugeben. Der Slaveteilnehmer 215 ist beispielsweise nicht dazu ausgelegt, das zweite Telegramm 225, das der Slaveteilnehmer 215 über die Empfangseinheit RX des zweiten Slave-Ports 620 empfangen hat, zu verarbeiten. Der Slaveteilnehmer 215 ist jedoch dazu ausgelegt, das zweite Telegramm 225 über die Sendeeinheit TX des ersten Slave-Ports 600 über den zweiten Slave-Kommunikationspfad 325 an die Empfangseinheit RX des dritten Vermittler-Ports 530 auszugeben. Die Empfangseinheit RX des dritten Vermittler-Ports 530 ist ausgelegt, das zweite Telegramm 225 zu empfangen. Die Vermittlungseinrichtung 210 ist weiterhin ausgelegt, das zweite Telegramm 225 über die Sendeeinheit TX des ersten Vermittler-Ports 500 über den zweiten Master-Kommunikationspfad 315 an die Empfangseinheit RX des ersten Master-Ports 400 auszugeben.

Der Masterteilnehmer 205 ist ausgelegt, das zweite Telegramm 225 über die Empfangseinheit RX des ersten Master-Ports 400 zu empfangen. Weiterhin kann der Masterteilnehmer 205 ausgelegt sein, eines der beiden Telegramme, also das erste Telegramm 220 oder das zweite Telegramm 225, zu verwerfen. Beispielsweise kann der Masterteilnehmer 205 im genannten Beispielsfall das zweite Telegramm 225 verwerfen, da der Slaveteilnehmer 215 das zweite Telegramm 225 nicht im Durchlauf verarbeitet hat. Der Masterteilnehmer 205 kann, alternativ zum Verwerfen eines der beiden Telegramme, in einem Lesebetrieb ausgelegt sein, die Daten in den Nutzdatenfeldern der beiden Telegramme zu verodern, also zu überlagern. Ein Veroder-Vorgang kann aufgrund der Überlagerung der Daten in den Nutzdatenfeldern der Telegramme, die der Masterteilnehmer 205 über den ersten Master-Kommunikationspfad 310 und über den zweiten Master-Kommunikationspfad 315 von dem Slaveteilnehmer 215 bzw. einer Kette an Slaveteilnehmern erhält, dazu dienen, intern im Masterteilnehmer 205 ein gemeinsames Telegramm zu bilden.

Figur 1 zeigt demnach das Automatisierungsnetzwerk 100 im Normalbetrieb, wobei der Normalbetrieb dadurch gekennzeichnet ist, dass der Telegrammverkehr im Automatisierungsnetzwerk 100 störungsfrei abläuft. Die Darstellung des in Figur 1 gezeigten Automatisierungsnetzwerks 100 mit seinen Netzwerkteilnehmern 200 ist exemplarisch gewählt worden, und schränkt den Schutzumfang der Erfindung nicht auf die gezeigte Darstellung ein. Das Automatisierungsnetzwerk 100 könnte in alternativer Weise von der Darstellung abweichen und Netzwerkteilnehmer 200 umfassen, die in Figur 1 nicht gezeigt sind. Die Begriffe RX und TX in Figur 1 bezeichnen allgemein einen Empfänger RX (RX: "Receiver" bzw. "receive") sowie einen Sender TX (TX: "Transceiver" bzw. "transceive").

Der erste Master-Kommunikationspfad 310 kann beispielsweise in Form einer ersten Datenleitung umgesetzt sein, der zweite Master-Kommunikationspfad 315 kann beispielsweise in Form einer zweiten Datenleitung umgesetzt sein. Denkbar ist, den ersten Slave-Kommunikationspfad 320 in Form einer dritten Datenleitung und den zweiten Slave-Kommunikationspfad 325 in Form einer vierten Datenleitung umzusetzen. Die erläuterte Ausführung ist jedoch nur beispielhaft und kann auch in alternativer Weise umgesetzt werden.

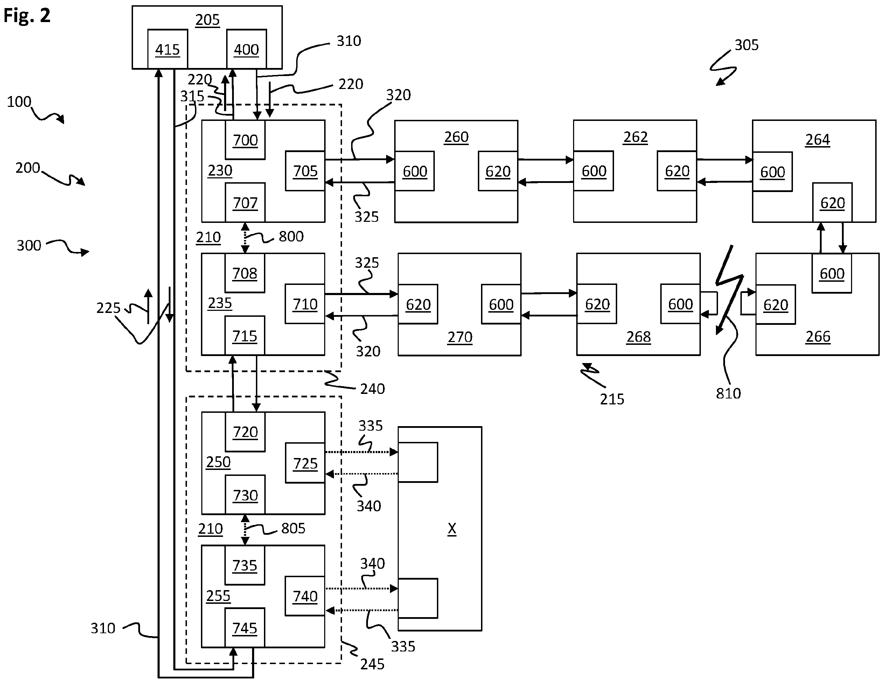

Zur besseren Übersichtlichkeit werden in den nachfolgenden Figuren auf die Darstellungen der Sendeeinheiten TX und der Empfangseinheiten RX der einzelnen Ports der Netzwerkteilnehmer 200 verzichtet. Gleichwohl weisen die in den Figuren 2 bis 4 gezeigten Ports der Netzwerkteilnehmer 200 jeweils eine Sendeeinheit TX zum Senden der Telegramme sowie eine Empfangseinheit RX zum Empfangen der Telegramme auf.

Figur 2 zeigt eine Erweiterung des in Figur 1 dargestellten Automatisierungsnetzwerks 100. Das Automatisierungsnetzwerk 100 in Figur 2 weist ebenfalls den Masterteilnehmer 205 auf. Weiterhin umfasst das Automatisierungsnetzwerk 100 in Figur 2 zwei Vermittlungseinrichtungen 210 als eine erste Vermittlungseinrichtung 240 sowie eine zweite Vermittlungseinrichtung 245. Darüber hinaus umfasst das Automatisierungsnetzwerk 100 sechs Slaveteilnehmer 215 als einen ersten Slaveteilnehmer 260, einen zweiten Slaveteilnehmer 262, einen dritten Slaveteilnehmer 264, einen vierten Slaveteilnehmer 266, einen fünften Slaveteilnehmer 268 und einen sechsten Slaveteilnehmer 270.

Der erste Slaveteilnehmer 260 bis sechste Slaveteilnehmer 270 sind in einer Kette angeordnet. Dabei weisen der erste Slaveteilnehmer 260 bis sechste Slaveteilnehmer 270 jeweils den ersten Slave-Port 600 sowie den zweiten Slave-Port 620 auf, über die die einzelnen Slaveteilnehmer 215 jeweils miteinander über das redundante Datenleitungsnetz verbunden sind. Eine Ausnahme der Verbindung der Slaveteilnehmer 215 über den ersten Slave-Port 600 und über den zweiten Slave-Port 620 ist zum Beispiel für den Abschnitt zwischen dem vierten Slaveteilnehmer 266 und dem fünften Slaveteilnehmer 268 gegeben. Beispielsweise tritt zwischen dem vierten Slaveteilnehmer 266 und dem fünften Slaveteilnehmer 268 eine erste Leitungsstörung 810 auf, die in Figur 2 mit dem Blitz dargestellt ist. Die erste Leitungsstörung 810 kann sich um eine physikalische Unterbrechung der Verbindung, also des Übertragungsmediums, zwischen dem vierten Slaveteilnehmer 266 und dem fünften Slaveteilnehmer 268 handeln.

Die erste Vermittlungseinrichtung 240 und die zweite Vermittlungseinrichtung 245 weisen in Figur 2 beispielsweise jeweils zwei Netzwerkverteiler auf. Zum Beispiel umfasst die erste Vermittlungseinrichtung 240 einen ersten Netzwerkverteiler 230 sowie einen zweiten Netzwerkverteiler 235. Die zweite Vermittlungseinrichtung 245 kann zum Beispiel einen dritten Netzwerkverteiler 250 sowie einen vierten Netzwerkverteiler 255 umfassen. Demnach können mehrere Vermittlungseinrichtungen 210 im Automatisierungsnetzwerk 100 vorgesehen sein, die ebenfalls wie die Slaveteilnehmer 215 in einer Kette angeordnet sein können und über den ersten Master-Kommunikationspfad 310 sowie über den zweiten Master-Kommunikationspfad 315 mit dem ersten Master-Port 400 sowie mit dem zweiten Master-Port 415 des Masterteilnehmers 205 verbunden sein können. Ferner kann das Automatisierungsnetzwerk 100 in Figur 2 auch weitere Vermittlungseinrichtungen 210 umfassen, die jedoch nicht dargestellt sind. Der erste Netzwerkverteiler 230 bis vierte Netzwerkverteiler 255 weist jeweils Verteiler-Ports auf.

Dabei entspricht ein erster Verteiler-Port 700 des ersten Netzwerkverteilers 230 beispielsweise dem ersten Vermittler-Port 500 der in Figur 1 gezeigten Vermittlungseinrichtung 210. Ein zweiter Verteiler-Port 705 des ersten Netzwerkverteilers 230 entspricht zum Beispiel dem dritten Vermittler-Port 530 der in Figur 1 gezeigten Vermittlungseinrichtung 210. Ein zweiter Verteiler-Port 710 des zweiten Netzwerkverteilers 235 kann beispielsweise dem vierten Vermittler-Port 550 der Vermittlungseinrichtung 210 in Figur 1 entsprechen. Überdies kann ein dritter Verteiler-Port 715 des zweiten Netzwerkverteilers 235 dem zweiten Vermittler-Port 515 in Figur 1 entsprechen. Weiterhin können der erste Netzwerkverteiler 230 sowie der zweite Netzwerkverteiler 235 der ersten Vermittlungseinrichtung 240 über eine erste interne Verbindung 800 verbunden sein. Wobei die erste interne Verbindung 800 beispielsweise eine Verbindung des dritten Verteiler-Ports 707 des ersten Netzwerkverteilers 230 sowie des ersten Verteiler-Ports 708 des zweiten Netzwerkverteilers 235 umfassen kann.

Die erste interne Verbindung 800 sowie die nachfolgend erläuterten weiteren internen Verbindungen können in ähnlicher Weise zu einer Ausgestaltung der Leitungsverbindung für den ersten Master-Kommunikationspfad 310 bzw. für den zweiten Master-Kommunikationspfad 315 bzw. für den ersten Slave-Kommunikationspfad 320 bzw. für den zweiten Slave-Kommunikationspfad 325 sowie für die nachstehend erläuterten weiteren Slave-Kommunikationspfade ausgebildet sein, als Kabelleitungen beispielsweise in Form von Kupferleitungen, Glasfaserleitungen, o.ä. Auch ist die Ausgestaltung der Leitungsverbindungen und die Qualität der Leitungsredundanz, die mit der vorgeschlagenen Erfindung erreicht werden kann, nicht von der Anordnung der einzelnen Netzwerkteilnehmer 200 abhängig.

Über den dritten Verteiler-Port 715 des zweiten Netzwerkverteilers 235 sowie über den ersten Master-Kommunikationspfad 310 und über den zweiten Master-Kommunikationspfad 315 kann die erste Vermittlungseinrichtung 240 mit der zweiten Vermittlungseinrichtung 245 verbunden sein, wobei die Verbindung des dritten Verteiler-Ports 715 des zweiten Netzwerkverteilers 235 die Verbindung mit dem ersten Verteiler-Port 720 des dritten Netzwerkverteilers 250 umfasst.

Der dritte Netzwerkverteiler 250 kann über den zweiten Verteiler-Port 725 des dritten Netzwerkverteilers 250 über einen dritten Slave-Kommunikationspfad 335 sowie über einen vierten Slave-Kommunikationspfad 340 mit einem Platzhalter X verbunden sein. Gleichermaßen kann der vierte Netzwerkverteiler 255 über den zweiten Verteiler-Port 740 des vierten Netzwerkverteilers 255 über den dritten Slave-Kommunikationspfad 335 sowie über den vierten Slave-Kommunikationspfad 340 mit dem Platzhalter X verbunden sein. Dabei steht der Platzhalter X stellvertretend für einen Slaveteilnehmer 215 und/oder für eine Kette an Slaveteilnehmern 215, die über den dritten Slave-Kommunikationspfad 335 sowie über den vierten Slave-Kommunikationspfad 340 mit der zweiten Vermittlungseinrichtung 245 verbunden sein kann.

Der dritte Netzwerkverteiler 250 kann über den dritten Verteiler-Port 730 des dritten Netzwerkverteilers 250 über eine zweite interne Verbindung 805 mit einem ersten Verteiler-Port 735 des vierten Netzwerkverteilers 255 verbunden sein. Da die zweite Vermittlungseinrichtung 245 ähnlich zur ersten Vermittlungseinrichtung 240 ausgebildet sein kann, kann der erste Verteiler-Port 720 des dritten Netzwerkverteilers 250, sowie der zweite Verteiler-Port 725 des dritten Netzwerkverteilers 250, wie der zweite Verteiler-Port 740 des vierten Netzwerkverteilers 255 und der dritte Verteiler-Port 745 des vierten Netzwerkverteilers 255, wie in der obigen Erläuterung zur ersten Vermittlungseinrichtung 240 ausgebildet sein. Aus diesem Grund wird auf die obige Erläuterung verwiesen. Der vierte Netzwerkverteiler 255 der zweiten Vermittlungseinrichtung 245 ist über den dritten Verteiler-Port 745 des vierten Netzwerkverteilers 255 über den ersten Master-Kommunikationspfad 310 und über den zweiten Master-Kommunikationspfad 315 mit dem zweiten Master-Port 415 des Masterteilnehmers 205 verbunden.

Die Kette an Slaveteilnehmern 215 ist über den ersten Slave-Port 600 des ersten Slaveteilnehmers 260 über den ersten Slave-Kommunikationspfad 320 und über den zweiten Slave-Kommunikationspfad 325 mit dem zweiten Verteiler-Port 705 des ersten Netzwerkverteilers 230 verbunden. Weiterhin ist der letzte Slaveteilnehmer 215 in der Kette, das heißt, der sechste Slaveteilnehmer 270 über den zweiten Slave-Port 620 über den ersten Slave-Kommunikationspfad 320 und über den zweiten Slave-Kommunikationspfad 325 mit dem zweiten Verteiler-Port 710 des zweiten Netzwerkverteilers 235 verbunden.

Im Unterschied zu den Erläuterungen zur Figur 1 kann der Masterteilnehmer 205 in Figur 2 beispielsweise dazu ausgelegt sein, der ersten Vermittlungseinrichtung 240 und der zweiten Vermittlungseinrichtung 245 fest vorzugeben, beispielsweise durch vorherige Konfiguration, über welchen Verteiler-Port des ersten Netzwerkverteilers 230 sowie über welchen Verteiler-Port des zweiten Netzwerkverteilers 235 sowie über welchen Verteiler-Port des dritten Netzwerkverteilers 250 und schließlich über welchen Verteiler-Port des vierten Netzwerkverteilers 255 der erste Netzwerkverteiler 230 bis vierte Netzwerkverteiler 255, ein Telegramm des Masterteilnehmers 205 auszugeben hat. Diese Einstellung kann der erste Netzwerkverteiler 230 bis vierte Netzwerkverteiler 255 beispielsweise jeweils in der Routingtabelle des jeweiligen Netzwerkverteilers hinterlegen, um dann beim Empfang eines Telegramms auf die gespeicherte Routinginformation für die Ausgabe des jeweiligen Telegramms über den zugeordneten Verteiler-Port zuzugreifen.

In einer alternativen Ausgestaltung kann ein Telegramm des Masterteilnehmers 205 auch eine Adressinformation aufweisen, mit der angezeigt wird, über welchen Verteiler-Port der entsprechende Netzwerkverteiler ein Telegramm zu routen hat. Die Adressinformation eines Telegramms kann sich beispielsweise im Kopfabschnitt des Telegramms befinden, um eine schnellstmögliche Routingentscheidung treffen zu können. Der Masterteilnehmer 205 kann beispielsweise dazu ausgelegt sein, ein erstes Telegramm 220 über den ersten Master-Port 400 über den ersten Master-Kommunikationspfad 310 an den ersten Verteiler-Port 700 des ersten Netzwerkverteilers 230 auszugeben. Der erste Netzwerkverteiler 230 leitet das erste Telegramm 220 über den zweiten Verteiler-Port 705 des ersten Netzwerkverteilers 230 über den ersten Slave-Kommunikationspfad 320 an den ersten Slave-Port 600 des ersten Slaveteilnehmers 260 weiter.

Der Empfang des ersten Telegramms 220 über den ersten Verteiler-Port 700 des ersten Netzwerkverteilers 230 und die Ausgabe des ersten Telegramms 220 über den zweiten Verteiler-Port 705 des ersten Netzwerkverteilers 230 kann der Masterteilnehmer 205 zum Beispiel vor dem Versenden des ersten Telegramms 220 im ersten Netzwerkverteiler 230 eingestellt haben. Das erste Telegramm 220 kann eine Zieladresse aufweisen, die sich beispielsweise im Kopfabschnitt des ersten Telegramms 220 befinden kann. Die Zieladresse kann dabei zum Beispiel als sogenannte ELAN ID ausgebildet sein. Für das erste Telegramm 220 kann die ELAN ID zum Beispiel den Wert 1 umfassen. Der erste Slaveteilnehmer 260 sendet das erste Telegramm 220 mit der ELAN ID 1 über den zweiten Slave-Port 620 des ersten Slaveteilnehmers 260 über den ersten Slave-Kommunikationspfad 320 an den ersten Slave-Port 600 des zweiten Slaveteilnehmers 262 weiter. Der erste Slaveteilnehmer 260 verarbeitet das erste Telegramm 220 im Durchlauf und leitet das erste Telegramm 220 weiter, ebenso leitet der zweite Slaveteilnehmer 262 das erste Telegramm 220 nach der Verarbeitung durch den zweiten Slaveteilnehmer 262 über den zweiten Slave-Port 620 des zweiten Slaveteilnehmers 262 über den ersten Slave-Kommunikationspfad 320 an den ersten Slave-Port 600 des dritten Slaveteilnehmers 264 weiter.

Der dritte Slaveteilnehmer 264 verarbeitet das erste Telegramm 220 im Durchlauf und leitet das erste Telegramm 220 über den zweiten Slave-Port 620 des dritten Slaveteilnehmers 264 über den ersten Slave-Kommunikationspfad 310 an den ersten Slave-Port 600 des vierten Slaveteilnehmers 266 weiter. Der vierte Slaveteilnehmer 266 verarbeitet das erste Telegramm 220 ebenfalls im Durchlauf. Beispielsweise kann der vierte Slaveteilnehmer 266 das erste Telegramm 220 nach der Verarbeitung im Durchlauf aufgrund der ersten Leitungsstörung 810, die eine Unterbrechung des ersten Slave-Kommunikationspfads 320 umfassen kann, nicht an den fünften Slaveteilnehmer 268 weiterleiten. Aufgrund der ersten Leitungsstörung 810 stößt der vierte Slaveteilnehmer 266 den Fehlerbetrieb an und koppelt das erste Telegramm 220 mit der ELAN ID 1 über den zweiten Slave-Kommunikationspfad 325 an den dritten Slaveteilnehmer 264 zurück. Die interne Rückkopplung des ersten Telegramms 220 im vierten Slaveteilnehmer 266, das heißt, ein Kurzschluss der Sendeeinheit mit der Empfangseinheit des zweiten Slave-Ports 620 des vierten Slaveteilnehmers 266 kann beispielsweise von einer in Figur 2 im vierten Slaveteilnehmer 266 bzw. in den übrigen Slaveteilnehmern nicht dargestellte Kopplungseinrichtung im Slaveteilnehmer 215 vorgenommen werden, die beispielsweise einen ersten Multiplexer sowie einen zweiten Multiplexer umfasst, wobei der erste Multiplexer und der zweite Multiplexer dazu ausgebildet sein können, jeweils die Sendeeinheit mit der Empfangseinheit des entsprechenden Slave-Ports intern kurzzuschließen, damit das Telegramm über den anderen Slave-Kommunikationspfad an den Masterteilnehmer 205 zurückgesandt werden kann.

Der vierte Slaveteilnehmer 266 sendet das erste Telegramm 220 mit der ELAN ID 1 über den ersten Slave-Port 600 des vierten Slaveteilnehmers 266 und über den zweiten Slave-Kommunikationspfad 325 an den zweiten Slave-Port 620 des dritten Slaveteilnehmers 264. Der dritte Slaveteilnehmer 264 verarbeitet das erste Telegramm 220 mit der ELAN ID 1 nun nicht mehr, sondern sendet das erste Telegramm 220 über den ersten Slave-Port 600 des dritten Slaveteilnehmers 264 und über den zweiten Slave-Kommunikationspfad 325 an den zweiten Slave-Port 620 des zweiten Slaveteilnehmers 262. Auch der zweite Slaveteilnehmer 262 ist nicht dazu ausgelegt, das erste Telegramm 220 abermals zu verarbeiten. Der zweite Slaveteilnehmer 262 sendet das erste Telegramm 220 über den ersten Slave-Port 600 des zweiten Slaveteilnehmers 262 und über den zweiten Slave-Kommunikationspfad 325 an den zweiten Slave-Port 620 des ersten Slaveteilnehmers 260. Der erste Slaveteilnehmer 260 ist abermals nicht zur erneuten Verarbeitung des ersten Telegramms 220 ausgelegt.

Der erste Slaveteilnehmer 260 gibt das erste Telegramm 220 über den ersten Slave-Port 600 des ersten Slaveteilnehmers 260 und über den zweiten Slave-Kommunikationspfad 325 an den zweiten Verteiler-Port 705 des ersten Netzwerkverteilers 230 aus. Der erste Netzwerkverteiler 230 gibt das erste Telegramm 220 über den ersten Verteiler-Port 700 des ersten Netzwerkverteilers 230 über den zweiten Master-Kommunikationspfad 315 an den ersten Master-Port 400 des Masterteilnehmers 205 aus. Der erste Netzwerkverteiler 230 kann das erste Telegramm 220 direkt über den ersten Verteiler-Port 700 des ersten Netzwerkverteilers 230 ausgeben, da beispielsweise für das erste Telegramm 220 vom Masterteilnehmer 205 voreingestellt worden ist, dass der erste Netzwerkverteiler 230 das erste Telegramm 220 jeweils über den ersten Verteiler-Port 700 des ersten Netzwerkverteilers 230 und über den zweiten Verteiler-Port 705 des ersten Netzwerkverteilers 230 empfangen bzw. ausgeben soll.

Ein vom Masterteilnehmer 205 über den zweiten Master-Port 415 und über den zweiten Master-Kommunikationspfad 315 ausgegebenes zweites Telegramm 225 kann beispielsweise eine ELAN ID 2 umfassen, die im Kopfabschnitt des zweiten Telegramms 225 enthalten sein kann. Es ist denkbar, dass der Masterteilnehmer 205 für den dritten Netzwerkverteiler 250 und den vierten Netzwerkverteiler 255 einstellt, dass der dritte Netzwerkverteiler 250 sowie der vierte Netzwerkverteiler 255 das zweite Telegramm 225 mit der ELAN ID 2 jeweils über den dritten Verteiler-Port 745 des vierten Netzwerkverteilers 255 empfängt und der vierte Netzwerkverteiler 255 das zweite Telegramm 225 über den ersten Verteiler-Port 735 des vierten Netzwerkverteilers 255 über eine zweite interne Verbindung 805 an den dritten Verteiler-Port 730 des dritten Netzwerkverteilers 250 ausgibt. Der zweite Netzwerkverteiler 250 kann das zweite Telegramm 225 über den ersten Verteiler-Port 720 des dritten Netzwerkverteilers 250 über den zweiten Master-Kommunikationspfad 315 an den dritten Verteiler-Port 715 des zweiten Netzwerkverteilers 235 ausgeben. Der zweite Netzwerkverteiler 235 kann das zweite Telegramm 225 über den zweiten Verteiler-Port 710 des zweiten Netzwerkverteilers 235 über den zweiten Slave-Kommunikationspfad 325 an den zweiten Slave-Port 620 des sechsten Slaveteilnehmers 270 ausgeben.

Dabei kann der Masterteilnehmer 205, wie bereits erläutert wurde, für den zweiten Netzwerkverteiler 235 voreinstellen, dass der zweite Netzwerkverteiler 235 das zweite Telegramm 225 über den dritten Verteiler-Port 715 des zweiten Netzwerkverteilers 235 empfängt und über den zweiten Verteiler-Port 710 des zweiten Netzwerkverteilers 235 weiterleitet. Der sechste Slaveteilnehmer 270 sendet das zweite Telegramm 225 über den ersten Slave-Port 600 des sechsten Slaveteilnehmers 270 über den zweiten Slave-Kommunikationspfad 325 an den zweiten Slave-Port 620 des fünften Slaveteilnehmers 268 weiter. Da der zweite Slave-Kommunikationspfad 325 zwischen dem fünften Slaveteilnehmer 268 und dem vierten Slaveteilnehmer 266 zum Beispiel durch die erste Leitungsstörung 810 unterbrochen ist, kann der fünfte Slaveteilnehmer 268 das zweite Telegramm 225 nicht an den vierten Slaveteilnehmer 266 weiterleiten. Aus diesem Grund stößt der fünfte Slaveteilnehmer 268 den Fehlerbetrieb an, gleichermaßen wie dies der vierte Slaveteilnehmer 266 für das erste Telegramm 220 bereits getan hat.

Auch der fünfte Slaveteilnehmer 268 kann eine nicht dargestellte Kopplungseinrichtung aufweisen, die einen ersten Multiplexer und einen zweiten Multiplexer umfasst, um die Sendeeinheit mit der Empfangseinheit des ersten Slave-Ports 600 des fünften Slaveteilnehmers 268 kurzzuschließen, um das zweite Telegramm 225 im fünften Slaveteilnehmer 268 rückzukoppeln, sodass der fünfte Slaveteilnehmer 268 das zweite Telegramm 225 nach dem Kurzschluss im Durchlauf verarbeiten kann. Der fünfte Slaveteilnehmer 268 gibt das zweite Telegramm 225 nach der Verarbeitung im Durchlauf über den ersten Slave-Kommunikationspfad 320 an den benachbarten Slaveteilnehmer, in dem gezeigten Beispiel also den sechsten Slaveteilnehmer 270, aus.

Der sechste Slaveteilnehmer 270 empfängt das zweite Telegramm 225 über den ersten Slave-Port 600 des sechsten Slaveteilnehmers 270, verarbeitet das zweite Telegramm 225 im Durchlauf und gibt das zweite Telegramm 225 dann über den zweiten Slave-Port 620 des sechsten Slaveteilnehmers 270 über den ersten Slave-Kommunikationspfad 320 an den zweiten Verteiler-Port 710 des zweiten Netzwerkverteilers 235 aus den zweiten Verteiler-Port 710 des zweiten Netzwerkverteilers 235 ausgibt bzw. empfängt. Darüber hinaus kann der zweite Netzwerkverteiler 235 dazu ausgelegt sein, das nicht dargestellte dritte Telegramm mit der ELAN ID 3 und das nicht dargestellte vierte Telegramm mit der ELAN ID 4 jeweils über den ersten Verteiler-Port 708 des zweiten Netzwerkverteilers 235 und über den dritten Verteiler-Port 715 des zweiten Netzwerkverteilers 235 zu empfangen bzw. auszugeben.

Weiterhin kann die Konfiguration des dritten Netzwerkverteilers 250 vorsehen, dass der dritte Netzwerkverteiler 250 das erste Telegramm 220 mit der ELAN ID 1 sowie das zweite Telegramm 225 mit der ELAN ID 2 jeweils über den ersten Verteiler-Port 720 des dritten Netzwerkverteilers 250 und über den dritten Verteiler-Port 730 des dritten Netzwerkverteilers 250 empfängt bzw. ausgibt. Des Weiteren kann der dritte Netzwerkverteiler 250 dazu ausgelegt sein, das nicht dargestellte dritte Telegramm mit der ELAN ID 3 sowie das nicht dargestellte vierte Telegramm mit der ELAN ID 4 jeweils über den ersten Verteiler-Port 720 des dritten Netzwerkverteilers 250 und über den zweiten Verteiler-Port 725 des dritten Netzwerkverteilers 250 zu empfangen bzw. auszugeben.

Eine Einstellung des vierten Netzwerkverteilers 255 kann bedeuten, dass der vierte Netzwerkverteiler 255 das erste Telegramm 220 mit der ELAN ID 1 sowie das zweite Telegramm 225 mit der ELAN ID 2 über den ersten Verteiler-Port 735 des vierten Netzwerkverteilers 255 und über den dritten Verteiler-Port 745 des vierten Netzwerkverteilers 255 empfängt bzw. ausgibt. Weiterhin kann der vierte Netzwerkverteiler 255 das nicht gezeigte dritte Telegramm mit der ELAN ID 3 sowie das nicht gezeigte vierte Telegramm mit der ELAN ID 4 jeweils über den dritten Verteiler-Port 745 des vierten Netzwerkverteilers 255 sowie über den zweiten Verteiler-Port 740 des vierten Netzwerkverteilers 255 empfangen bzw. ausgeben. Die genannten Konfigurationen des ersten Netzwerkverteilers 230 bis vierten Netzwerkverteilers 255 erlauben es im Automatisierungsnetzwerk 100, dass der Masterteilnehmer 205 das erste Telegramm 220, das zweite Telegramm 225, sowie das nicht dargestellte dritte Telegramm an den Platzhalter X und das nicht dargestellte vierte Telegramm an den Platzhalter X trotz einer Leitungsstörung wieder zurück erhält und der Masterteilnehmer 205 dadurch alle anderen Netzwerkteilnehmer 200 erreicht, insbesondere diejenigen, die an die erste Leitungsstörung 810 angrenzen.

Das in Figur 2 beschriebene Routing des ersten Telegramms 220 sowie des zweiten Telegramms 225 durch den ersten Netzwerkverteiler 230 bis vierten Netzwerkverteiler 255 basiert auf ELAN IDs, die das erste Telegramm 220 sowie das zweite Telegramm 225 jeweils aufweisen. Dabei können die ELAN IDs in ähnlicher Weise zu VLAN IDs ausgebildet sein und sich in einem Tag-Feld eines Telegramms befinden, wobei ein Telegramm vorzugsweise in Form eines EtherCAT Telegramms ausgebildet ist.

Basiert das Routing der Telegramme im Automatisierungsnetzwerk 100 in Figur 2 beispielsweise auf einem Routing mit MAC Adressen (MAC: Media Access Control), dann weist der erste Master-Port 400 beispielsweise die MAC Adresse MAC20 auf und der zweite Master-Port 415 zum Beispiel die MAC Adresse MAC10. Das erste Telegramm 220 kann dann beispielsweise eine erste MAC Adresse MAC1 aufweisen sowie das zweite Telegramm 225, das der Masterteilnehmer 205 über den zweiten Master-Port 415 ausgibt, kann eine zweite MAC Adresse MAC2 umfassen. Gibt der Masterteilnehmer 205 über den ersten Master-Port 400 das nicht dargestellte dritte Telegramm aus, so kann das dritte Telegramm zum Beispiel eine dritte MAC Adresse MAC3 aufweisen. Weiterhin kann der Masterteilnehmer 205 über den zweiten Master-Port 415 das nicht dargestellte vierte Telegramm, mit einer vierten MAC Adresse MAC4, ausgeben. Der Masterteilnehmer 205 kann den ersten Netzwerkverteiler 230 bis vierten Netzwerkverteiler 255 derart einstellen, dass zum Beispiel der erste Netzwerkverteiler 230 beim Empfang des zweiten Telegramms 225 über den zweiten Verteiler-Port 705 des ersten Netzwerkverteilers 230 die zweite MAC Adresse MAC2 des zweiten Telegramms 225 auf die MAC Adresse MAC20 des ersten Master-Ports 400 einstellt.

Darüber hinaus kann der Masterteilnehmer 205 den zweiten Netzwerkverteiler 235 einstellen, dass der zweite Netzwerkverteiler 235 beim Empfang des ersten Telegramms 220 mit der ersten MAC Adresse MAC1 über den zweiten Verteiler-Port 710 des zweiten Netzwerkverteilers 235 die erste MAC Adresse MAC1 auf die MAC Adresse MAC10 des zweiten Master-Ports 415 setzt. Ferner kann der Masterteilnehmer 205 den dritten Netzwerkverteiler 250 einstellen, dass der dritte Netzwerkverteiler 250 beim Empfang des nicht dargestellten vierten Telegramms mit einer vierten MAC Adresse MAC4 über den zweiten Verteiler-Port 725 des dritten Netzwerkverteilers 250 auf die MAC Adresse MAC20 des ersten Master-Ports 400 des Masterteilnehmers 205 setzt. Den vierten Netzwerkverteiler 255 kann der Masterteilnehmer 205 derart einstellen, dass der vierte Netzwerkverteiler 255 beim Empfang des nicht gezeigten dritten Telegramms mit der dritten MAC Adresse MAC3 über den zweiten Verteiler-Port 740 des vierten Netzwerkverteilers 255 die dritte MAC Adresse MAC3 des dritten Telegramms auf die MAC Adresse MAC10 des zweiten Master-Ports 415 des Masterteilnehmers 205 einstellt. Dabei beziehen sich die genannten MAC Adressen jeweils auf die Zieladressen der einzelnen Telegramme.

Alternativ zum Routing der Telegramme über MAC Adressen ist auch ein Routing der Telegramme über Destination IDs bei Verwendung eines sogenannten ROUT-TAG Tag-Feldes bzw. VLAN IDs bei Verwendung eines VLAN-TAG Tag-Feldes denkbar, wobei jedoch auf eine Erläuterung dessen verzichtet wird.

Die obige Erläuterung zur Einstellung des ersten Netzwerkverteilers 230 bis vierten Netzwerkverteilers 255 in Bezug auf den Empfang des ersten Telegramms 220 sowie des zweiten Telegramms 225 und des in Figur 2 nicht dargestellten dritten Telegramms bzw. des nicht dargestellten vierten Telegramms bezog sich auf die Änderung der MAC Adresse in Bezug auf die Ziel MAC Adresse, die der jeweiligen MAC Adresse des ersten Master-Ports 400 bzw. des zweiten Master-Ports 415 entspricht, da das erste Telegramm 220 sowie das zweite Telegramm 225 und das dritte Telegramm sowie das vierte Telegramm im Normalbetrieb jeweils den ersten Master-Port 400 mit der MAC Adresse MAC20 und den zweiten Master-Port 415 mit der MAC Adresse MAC10 erreichen.

Tritt nun die erste Leitungsstörung 810 zwischen dem vierten Slaveteilnehmer 266 und dem fünften Slaveteilnehmer 268 auf dem ersten Slave-Kommunikationspfad 320 sowie auf dem zweiten Slave-Kommunikationspfad 325 auf, so erreicht das erste Telegramm 220 den ersten Netzwerkverteiler 230 über den zweiten Slave-Kommunikationspfad 325. Der erste Netzwerkverteiler 230 ist ausgelegt, das erste Telegramm 220 über den zweiten Verteiler-Port 705 des ersten Netzwerkverteilers 230 zu empfangen und die erste MAC Adresse MAC1 auf die MAC Adresse MAC20 des ersten Master-Ports 400 zu setzen. Weiterhin gibt der erste Netzwerkverteiler 230 das erste Telegramm 220 über den ersten Verteiler-Port 700 des ersten Netzwerkverteilers 230 und über den zweiten Master-Kommunikationspfad 315 an den Masterteilnehmer 205 aus. Der Masterteilnehmer 205 empfängt das erste Telegramm 220 über den ersten Master-Port 400, der die MAC Adresse MAC20 aufweist.

Das zweite Telegramm 225, das der Masterteilnehmer 205 über den zweiten Master-Port 415 und den zweiten Master-Kommunikationspfad 315 ausgibt, erreicht den zweiten Netzwerkverteiler 235 nach dem Rückkoppeln des zweiten Telegramms 225 aufgrund der ersten Leitungsstörung 810, über den ersten Slave-Kommunikationspfad 320 und über den zweiten Verteiler-Port 710 des zweiten Netzwerkverteilers 235. Der zweite Netzwerkverteiler 235 ist ausgelegt, die zweite MAC Adresse MAC2 des zweiten Telegramms 225 auf die MAC Adresse MAC10 des zweiten Master-Ports 415 zu setzen, sodass der zweite Netzwerkverteiler 235 das zweite Telegramm 225 über den dritten Verteiler-Port 715 des zweiten Netzwerkverteilers 235 und den ersten Master-Kommunikationspfad 310 an die zweite Vermittlungseinrichtung 245 ausgibt. Die zweite Vermittlungseinrichtung 245 mit dem dritten Netzwerkverteiler 250 und dem vierten Netzwerkverteiler 255 ist ausgelegt, das zweite Telegramm 225 über den dritten Verteiler-Port 745 des vierten Netzwerkverteilers 255 und über den ersten Master-Kommunikationspfad 310 an den zweiten Master-Port 415 des Masterteilnehmers 205, mit der MAC Adresse MAC10, auszugeben. Beispielsweise betrifft die erste Leitungsstörung 810 den Telegrammweg des dritten Telegramms und des vierten Telegramms nicht, sodass die vorherigen Einstellungen für das dritte Telegramm mit der dritten MAC Adresse MAC3 im vierten Netzwerkverteiler 255 sowie die Einstellung für das vierte Telegramm mit der vierten MAC Adresse MAC4 im dritten Netzwerkverteiler 250 weiterhin gelten.

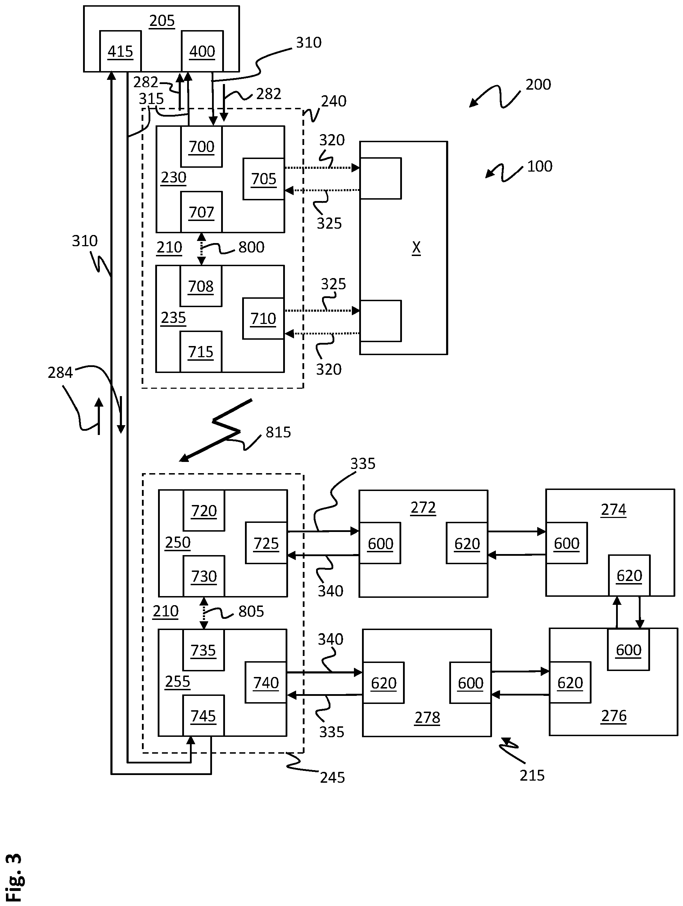

Figur 3 zeigt eine Erweiterung des in den Figuren 1 und 2 dargestellten Automatisierungsnetzwerks 100. Im Unterschied zu dem in den Figuren 1 und 2 dargestellten Automatisierungsnetzwerk 100 mit Netzwerkteilnehmern 200 wird nachfolgend in Figur 3 der Telegrammverkehr basierend auf der Ausgabe des dritten Telegramms 282 mit der ELAN ID 3 über den ersten Master-Port 400 des Masterteilnehmers 205 sowie des vierten Telegramms 284 mit der ELAN ID 4 über den zweiten Master-Port 415 Bezug genommen - und zwar zunächst für den in Figur 3 nicht dargestellten Normalbetrieb, bei dem keine Leitungsstörung auftritt. Der Masterteilnehmer 205 ist ausgelegt, das dritte Telegramm 282 mit der ELAN ID 3 über den ersten Master-Kommunikationspfad 310 an die erste Vermittlungseinrichtung 240 auszugeben, wobei die erste Vermittlungseinrichtung 240 den ersten Netzwerkverteiler 230 sowie den zweiten Netzwerkverteiler 235 umfasst. Der erste Netzwerkverteiler 230 ist ausgelegt, das dritte Telegramm 282 über den ersten Verteiler-Port 700 des ersten Netzwerkverteilers 230 zu empfangen und das dritte Telegramm 282 über den dritten Verteiler-Port 707 des ersten Netzwerkverteilers 230 über die erste interne Verbindung 800 an den ersten Verteiler-Port 708 des zweiten Netzwerkverteilers 235 auszugeben.

Der zweite Netzwerkverteiler 235 ist ausgelegt, das dritte Telegramm 282 über den dritten Verteiler-Port 715 des zweiten Netzwerkverteilers 235 über den ersten Master-Kommunikationspfad 310 an die zweite Vermittlungseinrichtung 245 weiterzuleiten, wobei die zweite Vermittlungseinrichtung 245 den dritten Netzwerkverteiler 250 sowie den vierten Netzwerkverteiler 255 umfasst. Der dritte Netzwerkverteiler 250 empfängt das dritte Telegramm 282 über den ersten Verteiler-Port 720 des dritten Netzwerkverteilers 250 und gibt das dritte Telegramm 282 über einen dritten Slave-Kommunikationspfad 335 an einen siebten Slaveteilnehmer 272 aus. Der siebte Slaveteilnehmer 272 ist ausgelegt, das dritte Telegramm 282 über den ersten Slave-Port 600 des siebten Slaveteilnehmers 272 zu empfangen, das dritte Telegramm 282 im Durchlauf zu verarbeiten und über den zweiten Slave-Port 620 des siebten Slaveteilnehmers 272 über den dritten Slave-Kommunikationspfad 335 an den achten Slaveteilnehmer 274 weiterzuleiten. Der achte Slaveteilnehmer 274 ist ausgelegt, das dritte Telegramm 282 über den ersten Slave-Port 600 des achten Slaveteilnehmers 274 zu empfangen, das dritte Telegramm 282 im Durchlauf zu verarbeiten und über den zweiten Verteiler-Port 620 des achten Slaveteilnehmers 274 über den dritten Slave-Kommunikationspfad 335 an den neunten Slaveteilnehmer 276 auszugeben.

Der neunte Slaveteilnehmer 276 empfängt das dritte Telegramm 282 über den ersten Slave-Port 600 des neunten Slaveteilnehmers 276, verarbeitet das dritte Telegramm 282 im Durchlauf, analog zu den vorherigen Slaveteilnehmern, und gibt das dritte Telegramm 282 über den zweiten Slave-Port 620 des neunten Slaveteilnehmers 276 über den dritten Slave-Kommunikationspfad 335 an den zehnten Slaveteilnehmer 278 aus. Der zehnte Slaveteilnehmer 278 ist ausgelegt, das dritte Telegramm 282 über den ersten Slave-Port 600 des zehnten Slaveteilnehmers 278 zu empfangen, das dritte Telegramm 282 im Durchlauf zu verarbeiten und über den zweiten Slave-Port 620 des zehnten Slaveteilnehmers 278 über den dritten Slave-Kommunikationspfad 335 an den vierten Netzwerkverteiler 255 weiterzuleiten. Der vierte Netzwerkverteiler 255 ist ausgelegt, das dritte Telegramm 282 über den zweiten Verteiler-Port 740 des vierten Netzwerkverteilers 255 zu empfangen und über den dritten Verteiler-Port 745 des vierten Netzwerkverteilers 255 über den ersten Master-Kommunikationspfad 310 an den Masterteilnehmer 205 weiterzuleiten. Der Masterteilnehmer 205 empfängt das dritte Telegramm 282 über den zweiten Master-Port 415.

Weiterhin ist der Masterteilnehmer 205 ausgelegt, das vierte Telegramm 284 über den zweiten Master-Kommunikationspfad 315 an die zweite Vermittlungseinrichtung 245 auszugeben. Der vierte Netzwerkverteiler 255 der zweiten Vermittlungseinrichtung 245 empfängt das vierte Telegramm 284 mit der ELAN ID 4 über den dritten Verteiler-Port 745 des vierten Netzwerkverteilers 255 und leitet das vierte Telegramm 284 über den zweiten Verteiler-Port 740 des vierten Netzwerkverteilers 255 und den vierten Slave-Kommunikationspfad 340 an den zehnten Slaveteilnehmer 278 weiter. Der zehnte Slaveteilnehmer 278 empfängt das vierte Telegramm 284 über den zweiten Slave-Port 620 des zehnten Slaveteilnehmers 278 und leitet es ohne eine Verarbeitung über den ersten Slave-Port 600 des zehnten Slaveteilnehmers 278 an den neunten Slaveteilnehmer 276 weiter. Der neunte Slaveteilnehmer 276 empfängt das vierte Telegramm 284 über den zweiten Slave-Port 620 des neunten Slaveteilnehmers 276 und leitet das vierte Telegramm 284 ohne Verarbeitung über den ersten Slave-Port 600 des neunten Slaveteilnehmers 276 und den vierten Slave-Kommunikationspfad 340 an den achten Slaveteilnehmer 274 weiter.

Der achte Slaveteilnehmer 274 empfängt das vierte Telegramm 284 über den zweiten Slave-Port 620 des achten Slaveteilnehmers 274 und leitet es direkt (ohne Verarbeitung) über den ersten Slave-Port 600 des achten Slaveteilnehmers 274 und über den vierten Slave-Kommunikationspfad 340 an den siebten Slaveteilnehmer 272 weiter. Der siebte Slaveteilnehmer 272 empfängt das vierte Telegramm 284 über den zweiten Slave-Port 620 des siebten Slaveteilnehmers 272 und gibt es über den ersten Slave-Port 600 des siebten Slaveteilnehmers 272 und den vierten Slave-Kommunikationspfad 340 an den dritten Netzwerkverteiler 250 aus. Der dritte Netzwerkverteiler 250 empfängt das vierte Telegramm 284 über den zweiten Verteiler-Port 725 des dritten Netzwerkverteilers 250 und gibt das vierte Telegramm 284 über den ersten Verteiler-Port 720 des dritten Netzwerkverteilers 250 über den zweiten Master-Kommunikationspfad 315 an die erste Vermittlungseinrichtung 240 aus. Die erste Vermittlungseinrichtung 240 ist ausgelegt, das vierte Telegramm 284 über den zweiten Netzwerkverteiler 235 zu empfangen. Der zweite Netzwerkverteiler 235 empfängt das vierte Telegramm 284 über den dritten Verteiler-Port 715 des zweiten Netzwerkverteilers 235 und leitet es über den ersten Verteiler-Port 708 des zweiten Netzwerkverteilers 235 und die erste interne Verbindung 800 an den dritten Verteiler-Port 707 des ersten Netzwerkverteilers 230 weiter.

Der erste Netzwerkverteiler 230 gibt das vierte Telegramm 284 über den zweiten Master-Kommunikationspfad 315 an den ersten Master-Port 400 des Masterteilnehmers 205 aus. Die bisherige Erläuterung bezog sich dabei auf den Normalbetrieb, das heißt, den Telegrammverkehr bzw. den Telegrammweg des dritten Telegramms 282 sowie des vierten Telegramms 284 ohne eine aufgetretene Leitungsstörung. Der Masterteilnehmer 205 empfängt das vierte Telegramm 284 über den ersten Master-Port 400 und ist im Normalbetrieb ausgelegt, das vierte Telegramm 284 zu verwerfen und nur das dritte Telegramm 282, das von den Slaveteilnehmern im Durchlauf verarbeitet worden ist, auszuwerten, da die Telegramme dem identischen Datenpaket entstammen.

Auch der erläuterte dritte Slave-Kommunikationspfad 335 bildet mit dem vierten Slave-Kommunikationspfad 340 eine Doppelringstruktur aus, zwischen dem zweiten Verteiler-Port 725 des dritten Netzwerkverteilers 250 und dem zweiten Verteiler-Port 740 des vierten Netzwerkverteilers 745.

Weiterhin kann ein in Figur 3 nicht dargestellter Telegrammverkehr des Masterteilnehmers 205, der im Zusammenhang mit den in den Figuren 1 und 2 beschrieben wurde, mittels des ersten Telegramms 220 und des zweiten Telegramms 225, in ähnlicher Weise umgesetzt werden, ohne dabei den Schutzumfang der Erfindung einzuschränken. Der Platzhalter X, der in Figur 3 exemplarisch über den ersten Slave-Kommunikationspfad 320 und über den zweiten Slave-Kommunikationspfad 325 mit dem ersten Netzwerkverteiler 230 sowie mit dem zweiten Netzwerkverteiler 235 verbunden ist, kann stellvertretend für einen Slaveteilnehmer und/oder für eine Kette an Slaveteilnehmern, wie sie über den dritten Slave-Kommunikationspfad 335 und über den vierten Slave-Kommunikationspfad 340 zum Beispiel an den dritten Netzwerkverteiler 250 und an den vierten Netzwerkverteiler 255 angeschlossen ist, sein. Zum Beispiel kann der Slaveteilnehmer 215 bzw. die Kette an Slaveteilnehmer, die durch den Platzhalter X repräsentiert werden, über das erste Telegramm 220 und das zweite Telegramm 225 angesprochen werden.

Nach der Beschreibung des zuvor im Zusammenhang mit der Fig. beschriebenen Normalbetriebs folgt nun die Beschreibung des in Fig. 3 dargestellten Fehlerbetriebs des Automatisierungsnetzwerks 100. Tritt nun beispielsweise, wie in Figur 3 dargestellt ist, eine zweite Leitungsstörung 815 zwischen der ersten Vermittlungseinrichtung 240 und der zweiten Vermittlungseinrichtung 245 auf dem ersten Master-Kommunikationspfad 310 bzw. dem zweiten Master-Kommunikationspfad 315 auf, so kann das dritte Telegramm 282 sowie das vierte Telegramm 284 nicht ohne Weiteres, das heißt ohne vorzunehmende Änderungen im Automatisierungsnetzwerk 100 geroutet werden.

Gleichermaßen könnte auch das erste und das zweite Telegramm, das in Figur 3 nicht dargestellt ist, jedoch den in Figur 2 erläuterten Telegrammweg nehmen kann, nicht ohne Weiteres aufgrund der zweiten Leitungsstörung 815 im Automatisierungsnetzwerk 100 geroutet werden. Die zweite Leitungsstörung 815 kann dabei in ähnlicher Weise zur ersten Leitungsstörung 810 in Figur 2 ausgebildet sein und eine physikalische Unterbrechung der Datenleitung bzw. des Übertragungsmediums umfassen. Erkennt die angrenzende Vermittlungseinrichtung, im dargestellten Beispiel in Figur 3 also die erste Vermittlungseinrichtung 240 und die zweite Vermittlungseinrichtung 245, dass keine Verbindung zwischen der ersten Vermittlungseinrichtung 240 und der zweiten Vermittlungseinrichtung 245 besteht, also der erste Master-Kommunikationspfad 310 und der zweite Master-Kommunikationspfad 315 unterbrochen sind, so ist sowohl die erste Vermittlungseinrichtung 240 als auch die zweite Vermittlungseinrichtung 245 ausgelegt, den Fehlerbetrieb anzustoßen und jeweils eine Fehlerinformation im dritten Telegramm 282 sowie im vierten Telegramm 284 zu setzen. Ferner kann auch jeder Netzwerkverteiler dazu ausgelegt sein, den Fehlerbetrieb anzustoßen, da es nicht zwingend erforderlich ist, dass der erste Netzwerkverteiler 230 und der zweite Netzwerkverteiler 235 der ersten Vermittlungseinrichtung 240 sowie der dritte Netzwerkverteiler 250 und der vierte Netzwerkverteiler 255 der zweiten Vermittlungseinrichtung 245 direkt miteinander verbunden sind.

Die Fehlerinformation, die der zweite Netzwerkverteiler 235 zum Beispiel für den dritten Verteiler-Port 715 des zweiten Netzwerkverteilers 235 setzt, sowie der dritte Netzwerkverteiler 250 für den ersten Verteiler-Port 720 des dritten Netzwerkverteilers 250 setzt, kann beispielsweise für die genannten Ports in einer alternativen ELAN ID begründet sein. Beispielsweise kann die alternative ELAN ID 0x403 (im Hexadezimalsystem) für die ELAN ID 3 lauten, sowie die alternative ELAN ID 0x404 (im Hexadezimalsystem) zur ELAN ID 4 sein. Der Vollständigkeit halber kann die alternative ELAN ID 0x401 (im Hexadezimalsystem) für das erste Telegramm 220 mit der ID 1 lauten, sowie die alternative ELAN ID 0x402 (in Hexadezimaldarstellung) für das zweite Telegramm 225 mit der ELAN ID 2 lauten. Die alternativen ELAN IDs, die genannt wurden, können für die einzelnen Netzwerkverteiler jeweils für den ersten Verteiler-Port und den dritten Verteiler-Port, der jeweils eine Verbindung zu einem benachbarten Netzwerkverteiler im Normalbetrieb aufweisen würde, vom Masterteilnehmer 205 eingestellt werden.

Folglich ist der zweite Netzwerkverteiler 235 sowie der dritte Netzwerkverteiler 250 jeweils ausgelegt, nach dem Feststellen der zweiten Leitungsstörung 815, das heißt der Unterbrechung der Verbindung zwischen dem zweiten Netzwerkverteiler 235 und dem dritten Netzwerkverteiler 250 zu prüfen, ob für die genannten Netzwerkverteiler eine alternative Route für das dritte Telegramm 282 sowie für das vierte Telegramm 284 hinterlegt ist. Für den alternativen Weg des dritten Telegramms 282 kann der zweite Netzwerkverteiler 235 nach erfolgreicher Prüfung des Vorhandenseins des alternativen Wegs ausgelegt sein, das dritte Telegramm 282 über den ersten Verteiler-Port 708 des zweiten Netzwerkverteilers 235 und die erste interne Verbindung 800 an den ersten Netzwerkverteiler 230 weiterzuleiten. Der erste Netzwerkverteiler 230 empfängt das dritte Telegramm 282 über den dritten Verteiler-Port 707 des ersten Netzwerkverteilers 230 und leitet das dritte Telegramm 282 über den ersten Verteiler-Port 700 des ersten Netzwerkverteilers 230 und den zweiten Master-Kommunikationspfad 315 an den ersten Master-Port 400 des Masterteilnehmers 205 zurück. Das vierte Telegramm 284 wird vom dritten Netzwerkverteiler 250 über den zweiten Verteiler-Port 725 des dritten Netzwerkverteilers 250 und über den ersten Slave-Kommunikationspfad 335 an den siebten Slaveteilnehmer 272 zurückgesendet.

Der siebte Slaveteilnehmer 272 empfängt das vierte Telegramm 284 über den ersten Slave-Port 600 des siebten Slaveteilnehmers 272, verarbeitet das vierte Telegramm 284 im Durchlauf und gibt das vierte Telegramm 284 in der alternativen Telegrammroute über den zweiten Slave-Port 620 des siebten Slaveteilnehmers 272 über den dritten Slave-Kommunikationspfad 335 an den achten Slaveteilnehmer 274 aus. Der achte Slaveteilnehmer 274 empfängt das vierte Telegramm 284 über den ersten Slave-Port 600 des achten Slaveteilnehmers 274, verarbeitet das vierte Telegramm 284 im Durchlauf und leitet das vierte Telegramm 284 über den zweiten Slave-Port 620 des achten Slaveteilnehmers 274 und über den dritten Slave-Kommunikationspfad 335 an den neunten Slaveteilnehmer 276 weiter. Der neunte Slaveteilnehmer 276 empfängt das vierte Telegramm 284 über den ersten Slave-Port 600 des neunten Slaveteilnehmers 276, verarbeitet das vierte Telegramm 284 im Durchlauf und gibt das vierte Telegramm 284 über den zweiten Slave-Port 620 des neunten Slaveteilnehmers 276 und den dritten Slave-Kommunikationspfad an den zehnten Slaveteilnehmer 278 aus. Der zehnte Slaveteilnehmer 278 empfängt das vierte Telegramm 284 über den ersten Slave-Port 600 des zehnten Slaveteilnehmers 278, verarbeitet das vierte Telegramm 284 im Durchlauf und leitet das vierte Telegramm 284 über den zweiten Slave-Port 620 des zehnten Slaveteilnehmers 278 und den dritten Slave-Kommunikationspfad 335 an den vierten Netzwerkverteiler 255. Der vierte Netzwerkverteiler 255 empfängt das vierte Telegramm 284 über den zweiten Verteiler-Port 740 des vierten Netzwerkverteilers 255 und leitet das vierte Telegramm 284 über den dritten Verteiler-Port 745 des vierten Netzwerkverteilers 255 und den ersten Master-Kommunikationspfad 310 an den Masterteilnehmer 205 zurück. Der Masterteilnehmer 205 empfängt das vierte Telegramm 284 über den zweiten Master-Port 415.

Alternativ zum Setzen der Fehlerinformation in Form der alternativen ELAN ID, wie erläutert wurde, kann auch ein freies Bit im Telegramm für die Fehlerinformation bzw. für das Routing genutzt werden. Werden ELAN IDs wie beschrieben für das Routing der Telegramme eingesetzt, so umfassen die Telegramme, die vorzugsweise als EtherCAT Telegramme ausgebildet sind, ein sogenanntes ELAN-TAG Tag-Feld. Das ELAN-TAG Tag-Feld kann dabei ähnlich zum VLAN-TAG Tag-Feld ausgebildet sein, jedoch zusätzliche Informationen umfassen, sofern das entsprechende Telegramm fragmentiert worden ist. Eine Fragmentierung kann beispielsweise jeder der in Figur 3 dargestellten ersten bis vierten Netzwerkverteiler 230, 235, 250, 255 vornehmen. Der Masterteilnehmer 205 benötigt die zusätzlichen Informationen über das Fragmentieren anschließend beim Zusammensetzen der einzelnen Telegrammfragmente. Ein Telegramm, das ein ELAN-TAG Tag-Feld aufweist, weist ferner auch ein sogenanntes ELAN-End-TAG Tag-Feld im Telegramm auf. Das heißt, ein Datenfeld vor dem Prüfsummenfeld, das Informationen umfasst, die später noch genauer erläutert werden. Die ELAN ID im ELAN-TAG Tag-Feld umfasst beispielsweise 12 Bit, wobei beim Setzen der Fehlerinformation für die alternative ELAN ID beispielsweise von dem entsprechenden angrenzenden Netzwerkverteiler bzw. der angrenzenden Vermittlungseinrichtung das Bit 11 im ELAN-TAG Tag-Feld gesetzt wird.

Werden alternativ für das Routing der Telegramme MAC Adressen im Automatisierungsnetzwerk 100 genutzt, so gilt allgemein, dass der jeweilige Netzwerkverteiler ausgelegt ist, für Telegramme, die der jeweilige Netzwerkverteiler über den ersten Verteiler-Port ausgeben soll, die MAC Adresse des Telegramms auf die MAC Adresse MAC10 des zweiten Master-Ports 415 einzustellen, damit der entsprechende Netzwerkverteiler das Telegramm an den Masterteilnehmer 205 zurücksenden kann. Gleichermaßen stellt der Masterteilnehmer 205 für die entsprechenden Netzwerkverteiler ein, für Telegramme, die jeweils über den dritten Verteiler-Port an den nachfolgenden Netzwerkteilnehmer 200 ausgegeben werden sollen, die MAC Adresse des Telegramms auf die Adresse MAC20 zu setzen, also die MAC Adresse des ersten Master-Ports 400. Durch die genannten Einstellungen sind die einzelnen Netzwerkverteiler allgemein in der Lage, auch bei einer festgestellten Leitungsstörung zwischen den Netzwerkverteilern, das heißt, auf dem ersten Master-Kommunikationspfad 310 und auf dem zweiten Master-Kommunikationspfad 315, die Telegramme über den jeweiligen anderen Master-Kommunikationspfad an den Masterteilnehmer 205 zurückzusenden.

Die Telegramme müssen weiterhin eine zusätzliche Kennung aufweisen, damit der Masterteilnehmer 205 bzw. andere Netzwerkteilnehmer 200 im Automatisierungsnetzwerk 100 erkennen können, dass im Automatisierungsnetzwerk 100 eine Leitungsstörung auf einem der Kommunikationspfade aufgetreten ist und die bereits getauschte MAC Adresse eines Telegramms nicht abermals getauscht werden darf, da das Automatisierungsnetzwerk 100 für die Erkennung einer einzelnen Leitungsstörung vorteilhaft eingesetzt werden kann. Für eine weitere Leitungsstörung bei bereits gesetzter Fehlerinformation, das heißt, bei bereits gesetzter alternativer ELAN ID oder alternativer MAC Adresse sind die Slaveteilnehmer sowie die Netzwerkverteiler vorzugsweise dazu ausgelegt, das entsprechende Telegramm zu verwerfen. Im Fall der ELAN ID für das Routing ist demnach keine zusätzliche Kennung im Telegramm erforderlich, die anzeigt, dass bereits der Fehlerbetrieb angestoßen worden ist.

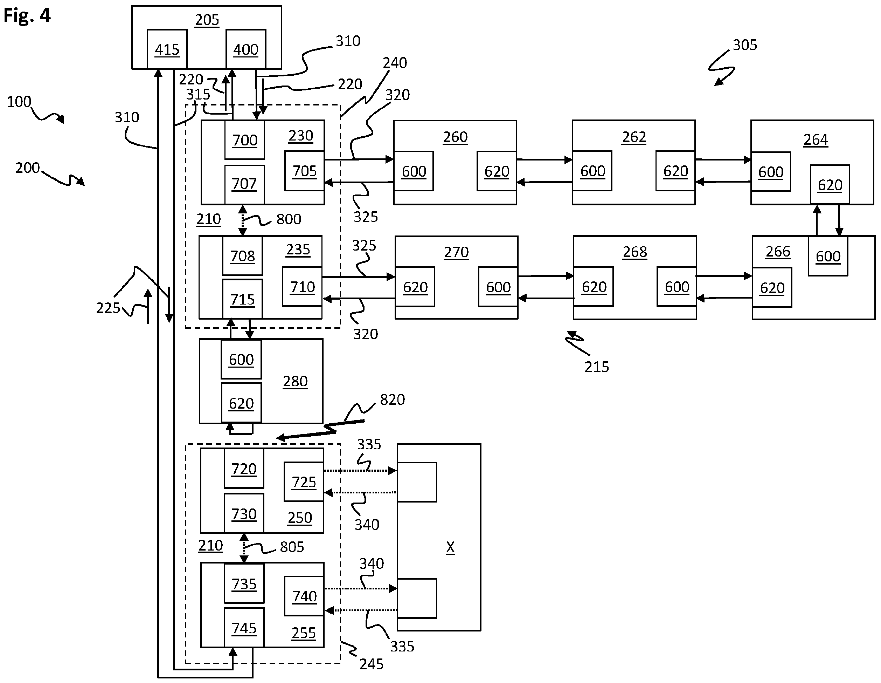

Figur 4 zeigt eine alternative Anordnung der Netzwerkteilnehmer 200 in dem Automatisierungsnetzwerk 100. Beispielsweise ist die Grundstruktur der Anordnung der Netzwerkteilnehmer 200 in Figur 4 an die Anordnung der Netzwerkteilnehmer 200 in Figur 2 angelehnt. Im Unterschied zu der Anordnung der Netzwerkteilnehmer 200 in Figur 2, bei der die erste Leitungsstörung 810 zwischen dem vierten Slaveteilnehmer 266 und dem fünften Slaveteilnehmer 268 aufgetreten ist, ist in Figur 4 beispielsweise eine dritte Leitungsstörung 820 zwischen einem elften Slaveteilnehmer 280 und dem dritten Netzwerkverteiler 250 der zweiten Vermittlungseinrichtung 245 aufgetreten. Der elfte Slaveteilnehmer 280 ist beispielsweise zwischen der ersten Vermittlungseinrichtung 240 und der zweiten Vermittlungseinrichtung 245 angeordnet, wobei die Verbindung zur zweiten Vermittlungseinrichtung 245 durch die genannte dritte Leitungsstörung 820 physikalisch unterbrochen sein kann. Der elfte Slaveteilnehmer 280 ist über den ersten Master-Kommunikationspfad 310 und über den zweiten Master-Kommunikationspfad 315 und über den ersten Slave-Port 600 des elften Slaveteilnehmers 280 mit dem dritten Verteiler-Port 715 des zweiten Netzwerkverteilers 235 verbunden.

Für die Anschlüsse bzw. die Verbindungen der übrigen Slaveteilnehmer 215 bzw. Netzwerkteilnehmer 200 im Automatisierungsnetzwerk 100 in Figur 4 wird auf die Ausführungen zu den obigen Figuren verwiesen und eine erneute Wiederholung der Merkmale wird an dieser Stelle nicht weiter ausgeführt. Weiterhin soll eine Wiederholung der Merkmale, die die Zuordnung der alternativen ELAN IDs bzw. der MAC Adressen für die einzelnen Ports der Netzwerkteilnehmer 200 im Automatisierungsnetzwerk 100 betreffen, in Figur 4 nicht vorgenommen werden. Ebenso wird auf die Wiederholung der ausführlichen Beschreibung des Telegrammverkehrs ausgehend vom Masterteilnehmer 205 verzichtet. Im in Figur 4 gezeigten Beispiel ist der elfte Slaveteilnehmer 280 ausgelegt, im ersten Telegramm 220 die erste Fehlerinformation zu setzen, nachdem der elfte Slaveteilnehmer 280 die dritte Leitungsstörung 820 zum nachfolgenden dritten Netzwerkverteiler 250 festgestellt hat. Dabei kann die erste Fehlerinformation zum Beispiel das Setzen der ELAN ID 1 auf die alternative ELAN ID 0x401 (im Hexadezimalsystem) umfassen.

Aufgrund der kurzgeschlossenen Sende- und Empfangseinheit im zweiten Slave-Port 620 des elften Slaveteilnehmers 280, ist der elfte Slaveteilnehmer 280 ausgelegt, das erste Telegramm 220 über den ersten Slave-Port 600 des elften Slaveteilnehmers 280 über den zweiten Master-Kommunikationspfad 315 an die erste Vermittlungseinrichtung 240 weiterzuleiten. Die erste Vermittlungseinrichtung 240 ist ausgelegt, das erste Telegramm 220 mit der alternativen ELAN ID, wie oben genannt wurde, über den dritten Verteiler-Port 715 des zweiten Netzwerkverteilers 235 zu empfangen. Der zweite Netzwerkverteiler 235 gibt das erste Telegramm 220 über den ersten Verteiler-Port 708 des zweiten Netzwerkverteilers 235 und die erste interne Verbindung 800 an den dritten Verteiler-Port 707 des ersten Netzwerkverteilers 230 aus. Der erste Netzwerkverteiler 230 gibt das erste Telegramm 220 über den ersten Verteiler-Port 700 des ersten Netzwerkverteilers 230 und über den zweiten Master-Kommunikationspfad 315 an den ersten Master-Port 400 des Masterteilnehmers 205 aus.

Würde das erste Telegramm 220 alternativ dazu zum Beispiel bereits die erste Fehlerinformation umfassen, das heißt beispielsweise die alternative ELAN ID mit dem Wert 0x401 (im Hexadezimalsystem), so wäre der elfte Slaveteilnehmer 280 ausgelegt, sofern der elfte Slaveteilnehmer 280 die dritte Leitungsstörung 820 zum nachfolgenden dritten Netzwerkverteiler 250 erkannt hat, das erste Telegramm 220 zu verwerfen. Dies ist dadurch begründet, dass das Automatisierungsnetzwerk 100 zum Erkennen nur einer Leitungsstörung ausgelegt ist, und bei Auftreten der zweiten Leitungsstörung die Netzwerkteilnehmer 200 dazu ausgelegt wären, die vorherige erste Fehlerinformation zu überschreiben und dadurch das erste Telegramm 220 in den ursprünglichen Zustand zu versetzen, sodass das erste Telegramm 220 im Automatisierungsnetzwerk umlaufen würde, ohne dass der Masterteilnehmer 205 feststellen könnte, dass eine Leitungsunterbrechung im Automatisierungsnetzwerk 100 also ein Störungsfall aufgetreten ist.

Ein möglicher Telegrammaufbau des ersten Telegramms 220, des zweiten Telegramms 225, des dritten Telegramms 282 sowie des vierten Telegramms 284, die jeweils in Form von EtherCAT Telegrammen ausgebildet sein können, kann gemäß nachfolgender Tabelle umgesetzt sein, wobei in der Tabelle die entsprechende Byteanzahl eines Datenfelds und/oder mehrerer Datenfelder und/oder eines Tag-Feldes und/oder mehrerer Tag-Felder im Telegramm sowie deren Bedeutung aufgeführt werden:

| **Byte** | **Bedeutung** | |
|---|---|---|
| 0 bis 5 | Ziel-MAC-Adresse | |
| 6 bis 11 | Absender-MAC-Adresse | |
| 12 bis 13 | Protokollidentifikation (Wert: 0xB6FE) | |
| 14 bis 19 | ELAN-TAG | |
| | | • "Type", 4 Bit (Wert: 0) |
| | | • "Priorität", 3 Bit |
| | | • "FragAllowed", 1 Bit |
| | | • "ELAN ID", 12 Bit |
| | | • "Reserve", 4 Bit |
| | | • "FragOffset", 8 Bit |
| | | • "FrameNo", 16 Bit |
| 20 | Ethertype (Wert: 0x88A4) | |
| ab 21 | Ethernet-Datenabschnitt | |
| n | Letztes Byte des Ethernet-Datenabschnitts oder "Padding" oder "Padding-Length" | |
| n+1 | ELAN-END-TAG, 1 Byte | |
| | | • "FragFollows", 1 Bit |
| | | • "NextPrio", 3 Bit |
| | | • "Padding", 1 Bit |
| (n+1) bis (n+4) | Prüfsumme | |

Gemäß der IEEE 802.3 Norm für den paketorientierten Ethernet Datenframe Format Aufbau, weist ein Ethernet Datenframe zusätzlich eine Präambel und ein Start Frame Delimiter (SFD) Datenfeld auf, welche in der Tabelle nicht enthalten sind. Gleichwohl umfassen das erste Telegramm 220, das zweite Telegramm 225, das dritte Telegramm 282 sowie das vierte Telegramm 284, jeweils eine Präambel und ein Start Frame Delimiter (SFD) Feld.

Auch für den Fall, dass das Routing des ersten Telegramms 220 des zweiten Telegramms 225, des dritten Telegramms 282 sowie des vierten Telegramms 284 auf der Verwendung des ELAN-TAG Tag-Feldes und dem Routing anhand von ELAN IDs basiert, so weisen das erste Telegramm 220, das zweite Telegramm 225, das dritte Telegramm 282 sowie das vierte Telegramm 284 jeweils das Ziel-MAC-Datenfeld mit der Ziel-MAC-Adresse sowie das Absender-MAC-Datenfeld mit der Absender-MAC-Adresse des empfangenden sowie des versendenden Netzwerkteilnehmers 200 auf.

Das Protokollidentifikations-Datenfeld weist den Wert 0xB6FE (im Hexadezimalsystem) auf, der dem Tag-Feld ELAN-TAG zugewiesen ist. Vorzugsweise kommt das ELAN-TAG Tag-Feld zum Einsatz, sofern das erste Telegramm 220, das zweite Telegramm 225, das dritte Telegramm 282 sowie das vierte Telegramm 284 von dem ersten Netzwerkverteiler 230, dem zweiten Netzwerkverteiler 235, dem dritten Netzwerkverteiler 250 und/oder dem vierten Netzwerkverteiler 255 fragmentiert werden kann, da das ELAN-TAG Tag-Feld die Informationen über die Fragmentierung des ersten Telegramms 220, des zweiten Telegramms 225, des dritten Telegramms 282 sowie des vierten Telegramms 284 umfasst. Zum Vergleich würde das Protokollidentifikations-Datenfeld den Wert 0x8100 (im Hexadezimalsystem) aufweisen, wenn das Tag-Feld als VLAN-TAG ausgebildet ist und eine VLAN ID zum Routing des ersten Telegramms 220, des zweiten Telegramms 225, des dritten Telegramms 282 sowie des vierten Telegramms 284, umfasst. Vorzugsweise würde das VLAN-TAG Tag-Feld für den Fall der Übertragung der Telegramme ohne Fragmentierung im Automatisierungsnetzwerk 100 verwendet werden.

Das ELAN-TAG Tag-Feld weist ein 4 Bit umfassendes Type-Datenfeld auf, mit dem das ELAN-TAG Tag-Feld mit dem Wert Null standardmäßig gekennzeichnet wird und wobei die Werte 1 bis 3 zum Beispiel für mögliche Erweiterungen reserviert sind. Weiterhin umfasst das ELAN-TAG Tag-Feld ein 3 Bit umfassendes Prioritäts-Datenfeld mit einer Prioritätsstufe des Telegramms, wobei das Prioritäts-Datenfeld mit der Prioritätsstufe ähnlich zur VLAN-Priorität in einem VLAN-TAG Tag-Feld ausgebildet ist. Mithilfe eines 1 Bit umfassenden FragAllowed-Datenfeld wird dem empfangenden Netzwerkteilnehmer 200 eine mögliche Fragmentierung bzw. eine Fragmentierbarkeit des Telegramms angezeigt. Über die ELAN ID kann das entsprechende Telegramm im Automatisierungsnetzwerk 100 geroutet werden, wobei sich die ELAN ID zum Beispiel in einem 12 Bit umfassenden ELAN-ID-Datenfeld befindet. Die ELAN ID kann in ähnlicher Weise zur VLAN ID ausgebildet sein, zum Beispiel in Form einer Hexadezimalzahl, wie oben erläutert wurde.

Weiterhin weist das ELAN-TAG Tag-Feld ein 4 Bit umfassendes Reserve-Datenfeld auf, für das noch keine feste Belegung vorgesehen ist. Mit einem 8 Bit umfassenden FragOffset-Datenfeld im ELAN-TAG Tag-Feld wird ein Offset der Daten im Telegramm angegeben, wobei der Offset ab dem Ethertype-Datenfeld des Telegramms kalkuliert wird. Schließlich weist das ELAN-TAG Tag-Feld außerdem ein 16 Bit umfassendes FrameNo-Datenfeld auf. Das FrameNo-Datenfeld umfasst eine Nummer bzw. eine Zahl des Telegramms, die vom Sender bzw. von demjenigen, der das Telegramm im Automatisierungsnetzwerk 100 ausgibt, erhöht bzw. inkrementiert wird.

Das Byte 20 im Telegramm weist zum Beispiel ein Ethertype-Datenfeld auf. Ein EtherCAT Telegramm wird durch den Wert 0x88A4 (im Hexadezimalsystem) im Ethertype-Datenfeld gekennzeichnet, da das EtherCAT Protokoll das verwendete Protokoll der nächsthöheren Schicht innerhalb der Nutzdaten, also innerhalb eines Ethernet-Datenabschnitts, darstellt. Eine Schicht und eine nächsthöhere Schicht sind nach dem OSI-Modell definiert. Zum Vergleich würde ein Telegramm den Wert 0x0800 (im Hexadezimalsystem) im Ethertype-Datenfeld aufweisen, sofern das verwendete Protokoll der nächsthöheren Schicht innerhalb der Nutzdaten das IP-Protokoll (IP: Internet Protocol) bildet.

Ein Ethernet-Datenabschnitt im Telegramm kann ab dem Byte 21 gebildet werden, wobei der Ethernet-Datenabschnitt in einem EtherCAT Telegramm einen EtherCAT Header und eine Mehrzahl an EtherCAT Datagrammen umfasst. Der EtherCAT Header weist ein EtherCAT Typ-Datenfeld mit dem Wert 1 oder mit dem Wert 6 auf, wobei mit dem Wert 1 des EtherCAT Typ-Datenfelds einer Verarbeitungseinheit eines Slaveteilnehmers eine Verarbeitung des EtherCAT Telegramms angezeigt wird, während mit dem Wert 6 des EtherCAT Typ-Datenfelds der Verarbeitungseinheit eines Slaveteilnehmers eine Sperrung der Verarbeitung des EtherCAT Telegramms angezeigt wird.

Das Byte n kann beispielsweise in Form des letzten Byte des Ethernet-Datenabschnitts ausgebildet sein. Alternativ dazu kann das Byte n ein Padding-Datenfeld repräsentieren, sofern mit dem EtherCAT Telegramm als Nutzdaten beispielsweise weniger als 46 bzw. 42 Byte (ohne bzw. mit einem der IEEE 802.1Q Norm entsprechenden VLAN TAG) zu übertragen sind, wobei die Präambel und das Start Frame Delimiter (SFD) Datenfeld dabei nicht mitgezählt werden. Mit den zusätzlichen, als Pad angefügten Byte, die in das EtherCAT Telegramm eingefügt werden, kann der Ethernet Datenframe auf die erforderliche Minimalgröße von 64 Byte gebracht werden.

Alternativ kann das Byte n in Form eines Padding-Length-Datenfeld ausgebildet sein, das eine Anzahl bzw. eine Länge von als Pad angefügte Byte umfasst.

Befindet sich ein ELAN-TAG Tag-Feld im Kopfabschnitt eines Telegramms, so weist ein Endabschnitt des Telegramms vor einem CRC-Datenfeld, das den Wert einer Prüfsumme umfasst, ein 1 Byte umfassendes ELAN-END-TAG Datenfeld auf. Das ELAN-END-TAG Datenfeld weist ein 1 Bit umfassendes FragFollows-Datenfeld auf, mit dem gekennzeichnet wird, ob noch mindesteins ein Fragment des fragmentierten Telegramms folgt. Weiterhin umfasst das ELAN-END-TAG Datenfeld ein 3 Bit umfassendes NextPrio-Datenfeld, das die Priorität des nächsten Telegramms angibt, sofern die Priorität des nachfolgenden Telegramms bekannt ist. Schließlich kann das ELAN-END-TAG Datenfeld noch ein 1 Bit umfassendes Padding-Datenfeld aufweisen. Sofern sich das Fragment des Telegramms um das letzte Fragment des Telegramms handelt und das letzte Fragment als Pad angefügte Byte bzw. Padding Byte umfasst, ist das Bit des Padding-Datenfelds gesetzt und das Byte n des Telegramms weist die Anzahl bzw. die Länge der Padding-Byte (Padding-Length) auf. Die Byte (n+1) bis (n+4) im Telegramm geben das CRC-Datenfeld mit der Prüfsumme des Telegramms an.

Das in den Figuren dargestellte Automatisierungsnetzwerk 100 mit den Netzwerkteilnehmern 200 kann auch mit mehr als zwei Vermittlungseinrichtungen 210 und mehr als vier Netzwerkverteilern umgesetzt sein. Gleichermaßen können die Netzwerkverteiler jeweils mehr als drei Verteiler-Ports umfassen. Die zusätzlichen Verteiler-Ports können entweder die Funktionalität der ersten Verteiler-Ports und der dritten Verteiler-Ports der Netzwerkverteiler umfassen, sofern an den zusätzlichen Verteiler-Ports weitere Netzwerkverteiler angeschlossen sind, oder die Funktionalität der zweiten Verteiler-Ports aufweisen, an denen jeweils nur ein Slaveteilnehmer 215 bzw. eine Kette von Slaveteilnehmern 215 angeschlossen sind.

Ferner ist das vorgeschlagene Verfahren samt dem vorgeschlagenen Automatisierungsnetzwerk 100 nicht auf den Telegrammverkehr im Steuerungsbetrieb beschränkt, sondern kann gleichermaßen auch erfolgreich während einer Konfigurationsphase des Automatisierungsnetzwerks 100 samt seiner Netzwerkteilnehmer 200 eingesetzt werden, selbst für den Fall, dass während der Konfigurationsphase des Automatisierungsnetzwerks 100 eine Leitungsstörung auftritt. Somit kann sogar für die Konfigurationsphase, bei der die weiteren Netzwerkteilnehmer 200 des Automatisierungsnetzwerks 100 vom Masterteilnehmer 205 zum Beispiel erst erfasst werden, eine durchgängige Kommunikation des Masterteilnehmers 205 mit den zu erfassenden weiteren Netzwerkteilnehmern 200 garantiert werden.

### Bezugszeichenliste

- 100: Automatisierungsnetzwerk
- 200: Netzwerkteilnehmer
- 205: Masterteilnehmer

- 210: Vermittlungseinrichtung
- 215: Slaveteilnehmer

- 220: erstes Telegramm
- 225: zweites Telegramm

- 230: erster Netzwerkverteiler
- 235: zweiter Netzwerkverteiler

- 240: erste Vermittlungseinrichtung
- 245: zweite Vermittlungseinrichtung

- 250: dritter Netzwerkverteiler
- 255: vierter Netzwerkverteiler

- 260: erster Slaveteilnehmer
- 262: zweiter Slaveteilnehmer
- 264: dritter Slaveteilnehmer
- 266: vierter Slaveteilnehmer
- 268: fünfter Slaveteilnehmer
- 270: sechster Slaveteilnehmer
- 272: siebter Slaveteilnehmer
- 274: achter Slaveteilnehmer
- 276: neunter Slaveteilnehmer
- 278: zehnter Slaveteilnehmer
- 280: elfter Slaveteilnehmer

- 282: drittes Telegramm
- 284: viertes Telegramm

- 300: erste Doppelringstruktur
- 305: zweite Doppelringstruktur
- 310: erster Master-Kommunikationspfad
- 315: zweiter Master-Kommunikationspfad
- 320: erster Slave-Kommunikationspfad
- 325: zweiter Slave-Kommunikationspfad
- 335: dritter Slave-Kommunikationspfad
- 340: vierter Slave-Kommunikationspfad

- 400: erster Master-Port
- 415: zweiter Master-Port

- 500: erster Vermittler-Port
- 515: zweiter Vermittler-Port
- 530: dritter Vermittler-Port
- 550: vierter Vermittler-Port

- 600: erster Slave-Port
- 620: zweiter Slave-Port

- 700: erster Verteiler-Port des ersten Netzwerkverteilers
- 705: zweiter Verteiler-Port des ersten Netzwerkverteilers
- 707: dritter Verteiler-Port des ersten Netzwerkverteilers
- 708: erster Verteiler-Port des zweiten Netzwerkverteilers
- 710: zweiter Verteiler-Port des zweiten Netzwerkverteilers
- 715: dritter Verteiler-Port des zweiten Netzwerkverteilers
- 720: erster Verteiler-Port des dritten Netzwerkverteilers
- 725: zweiter Verteiler-Port des dritten Netzwerkverteilers
- 730: dritter Verteiler-Port des dritten Netzwerkverteilers
- 735: erster Verteiler-Port des vierten Netzwerkverteilers
- 740: zweiter Verteiler-Port des vierten Netzwerkverteilers
- 745: dritter Verteiler-Port des vierten Netzwerkverteilers

- 800: erste interne Verbindung
- 805: zweite interne Verbindung

- 810: erste Leitungsstörung
- 815: zweite Leitungsstörung
- 820: dritte Leitungsstörung

- TX: Sendeeinheit
- RX: Empfangseinheit

- X: Platzhalter

## Patentansprüche

1. Automatisierungsnetzwerk (100), das mehrere Netzwerkteilnehmer (200) aufweist, die wenigstens einen Masterteilnehmer (205), wenigstens eine Vermittlungseinrichtung (210) und wenigstens einen Slaveteilnehmer (215) umfassen,
wobei der Masterteilnehmer (205) Master-Ports, die Vermittlungseinrichtung (210) Vermittler-Ports und der Slaveteilnehmer (215) Slave-Ports aufweist, die jeweils eine Sendeeinheit (TX) zum Senden von Telegrammen und eine Empfangseinheit (RX) zum Empfangen von Telegrammen umfassen,
wobei die Sendeeinheit (TX) eines ersten Master-Ports (400) über einen ersten Master-Kommunikationspfad (310) mit der Empfangseinheit (RX) eines ersten Vermittler-Ports (500) und die Sendeeinheit (TX) eines zweiten Vermittler-Ports (515) über den ersten Master-Kommunikationspfad (310) mit der Empfangseinheit eines zweiten Master-Ports (415) verbunden ist,
wobei die Sendeeinheit (TX) des zweiten Master-Ports (415) über einen zweiten Master-Kommunikationspfad (315) mit der Empfangseinheit (RX) des zweiten Vermittler-Ports (515) und die Sendeeinheit (TX) des ersten Vermittler-Ports (500) über den zweiten Master-Kommunikationspfad (315) mit der Empfangseinheit (RX) des ersten Master-Ports (400) verbunden ist, um eine erste Doppelringstruktur (300) auszubilden,
wobei die Sendeeinheit (TX) eines dritten Vermittler-Ports (530) über einen ersten Slave-Kommunikationspfad (320) mit der Empfangseinheit (RX) eines ersten Slave-Ports (600) und die Sendeeinheit (TX) eines zweiten Slave-Ports (620) über den ersten Slave-Kommunikationspfad (320) mit der Empfangseinheit (RX) eines vierten Vermittler-Ports (550) verbunden ist,
wobei die Sendeeinheit (TX) des vierten Vermittler-Ports (550) über einen zweiten Slave-Kommunikationspfad (325) mit der Empfangseinheit (RX) des zweiten Slave-Ports (620) und die Sendeeinheit (TX) des ersten Slave-Ports (600) über den zweiten Slave-Kommunikationspfad (325) mit der Empfangseinheit (RX) des dritten Vermittler-Ports (530) verbunden ist, um eine zweite Doppelringstruktur (305) auszubilden,
wobei der Masterteilnehmer (205) ausgelegt ist, zwei Telegramme zu versenden, die auf dem gleichen Datenpaket basieren,
wobei der Masterteilnehmer (205) ausgelegt ist, ein erstes Telegramm (220) über die Sendeeinheit (TX) des ersten Master-Ports (400) und über den ersten Master-Kommunikationspfad (310) an die Vermittlungseinrichtung (210) auszugeben, und ein zweites Telegramm (225) über die Sendeeinheit (TX) des zweiten Master-Ports (415) und über den zweiten Master-Kommunikationspfad (315) an die Vermittlungseinrichtung (210) auszugeben,
wobei die Vermittlungseinrichtung (210) ausgelegt ist, das erste Telegramm (220) über die Empfangseinheit (RX) des ersten Vermittler-Ports (500) zu empfangen und über die Sendeeinheit (TX) des dritten Vermittler-Ports (530) über den ersten Slave-Kommunikationspfad (320) an die Empfangseinheit (RX) des ersten Slave-Ports (600) weiterzuleiten,
wobei der Slaveteilnehmer (215) ausgelegt ist, das erste Telegramm (220) nach der Verarbeitung im Durchlauf über die Sendeeinheit (TX) des zweiten Slave-Ports (620) über den ersten Slave-Kommunikationspfad (320) an die Empfangseinheit (RX) des vierten Vermittler-Ports (550) weiterzuleiten,
wobei die Vermittlungseinrichtung (210) ausgelegt ist, das über die Empfangseinheit (RX) des vierten Vermittler-Ports (550) empfangene erste Telegramm (220) über die Sendeeinheit (TX) des zweiten Vermittler-Ports (515) über den ersten Master-Kommunikationspfad (310) an die Empfangseinheit (RX) des zweiten Master-Ports (415) weiterzuleiten,
wobei die Vermittlungseinrichtung (210) ausgelegt ist, das zweite Telegramm (225) über die Empfangseinheit (RX) des zweiten Vermittler-Ports (515) zu empfangen und über die Sendeeinheit (TX) des vierten Vermittler-Ports (550) über den zweiten Slave-Kommunikationspfad (325) an die Empfangseinheit (RX) des zweiten Slave-Ports (620) weiterzuleiten,
wobei der Slaveteilnehmer (215) ausgelegt ist, das zweite Telegramm (225) über die Sendeeinheit (TX) des ersten Slave-Ports (600) über den zweiten Slave-Kommunikationspfad (325) an die Empfangseinheit (RX) des dritten Vermittler-Ports (530) weiterzuleiten,
wobei die Vermittlungseinrichtung (210) ausgelegt ist, das über die Empfangseinheit (RX) des dritten Vermittler-Ports (530) empfangene zweite Telegramm (225) über die Sendeeinheit (TX) des ersten Vermittler-Ports (500) über den zweiten Master-Kommunikationspfad (315) an die Empfangseinheit (RX) des ersten Master-Ports (400) weiterzuleiten, und
wobei die Vermittlungseinrichtung (210) und der Slaveteilnehmer (215) im Fehlerbetrieb ausgelegt sind, das erste Telegramm (220) an den Masterteilnehmer (205) zurückzusenden, sodass der Masterteilnehmer (205) das erste Telegramm (220) über die Empfangseinheit (RX) des ersten Master-Ports (400) empfängt und/oder das zweite Telegramm (225) an den Masterteilnehmer (205) zurückzusenden, sodass der Masterteilnehmer (205) das zweite Telegramm (225) über die Empfangseinheit (RX) des zweiten Master-Ports (415) empfängt.

2. Automatisierungsnetzwerk (100) nach Anspruch 1,
wobei mehrere Slaveteilnehmer (215) vorgesehen sind, die in einer Kette angeordnet sind,
wobei die Slaveteilnehmer (215) in der Kette jeweils über den ersten Slave-Port (600) und über den zweiten Slave-Port (620) verbunden sind,
wobei die Kette an Slaveteilnehmern (215) über den ersten Slave-Kommunikationspfad (320) und über den zweiten Slave-Kommunikationspfad (325) mit dem dritten Vermittler-Port (530) und mit dem vierten Vermittler-Port (550) verbunden ist.

3. Automatisierungsnetzwerk (100) nach Anspruch 1 oder 2,
wobei mehrere Vermittlungseinrichtungen (210) vorgesehen sind, die in einer Kette angeordnet sind,
wobei die Kette an Vermittlungseinrichtungen (210) über den ersten Master-Kommunikationspfad (310) und über den zweiten Master-Kommunikationspfad (315) mit dem ersten Master-Port (400) und dem zweiten Master-Port (415) verbunden ist, und
wobei das erste Telegramm (220) und/oder das zweite Telegramm (225) jeweils eine Adressinformation aufweist, die der entsprechenden Vermittlungseinrichtung (215) anzeigt, ob das erste Telegramm (220) für den ersten Slave-Kommunikationspfad (320) und/oder ob das zweite Telegramm (225) für den zweiten Slave-Kommunikationspfad (325) und/oder ob das erste Telegramm (220) für den ersten Master-Kommunikationspfad (310) und/oder ob das zweite Telegramm (220) für den zweiten Master-Kommunikationspfad (315) bestimmt ist.

4. Automatisierungsnetzwerk (100) nach einem der Ansprüche 1 bis 3,
wobei die Vermittlungseinrichtung (210) einen ersten Netzwerkverteiler (230) und einen zweiten Netzwerkverteiler (235) umfasst, die jeweils mehrere Verteiler-Ports aufweisen,
wobei ein erster Verteiler-Port (700) des ersten Netzwerkverteilers (230) dem ersten Vermittler-Port (500) der Vermittlungseinrichtung (210) entspricht und ein zweiter Verteiler-Port (705) des ersten Netzwerkverteilers (230) dem dritten Vermittler-Port (530) der Vermittlungseinrichtung (210) entspricht.

5. Automatisierungsnetzwerk (100) nach Anspruch 4,
wobei ein an eine Störung angrenzender Netzwerkverteiler und/oder eine an eine Störung angrenzende Vermittlungseinrichtung (210) im Fehlerbetrieb ausgelegt ist, eine erste Fehlerinformation für das erste Telegramm (220) und/oder eine zweite Fehlerinformation für das zweite Telegramm (225) zu setzen und das erste Telegramm (220) mit der ersten Fehlerinformation über den zweiten Master-Kommunikationspfad (315) und/oder das zweite Telegramm (225) mit der zweiten Fehlerinformation über den ersten Master-Kommunikationspfad (310) an den Masterteilnehmer (205) zurückzusenden,
wobei der an eine Störung angrenzende Netzwerkverteiler und/oder die an eine Störung angrenzende Vermittlungseinrichtung (210) und/oder ein an eine Störung angrenzender Slaveteilnehmer (215) im Fehlerbetrieb ausgelegt sind, sofern das erste Telegramm (220) bereits die erste Fehlerinformation und/oder das zweite Telegramm (225) bereits die zweite Fehlerinformation aufweist, das erste Telegramm (220) mit der ersten Fehlerinformation und/oder das zweite Telegramm (225) mit der zweiten Fehlerinformation zu verwerfen.

6. Automatisierungsnetzwerk (100) nach einem der Ansprüche 3 bis 5,
wobei ein Slaveteilnehmer (215) zwischen einer ersten Vermittlungseinrichtung (240) und einer zweiten Vermittlungseinrichtung (245) und/oder zwischen einem ersten Netzwerkverteiler (230) und einem zweiten Netzwerkverteiler (235) angeordnet ist,
wobei der Slaveteilnehmer (215) im Fehlerbetrieb ausgelegt ist, die erste Fehlerinformation für das erste Telegramm (220) und/oder die zweite Fehlerinformation für das zweite Telegramm (225) zu setzen und das erste Telegramm (220) mit der ersten Fehlerinformation über den zweiten Master-Kommunikationspfad (315) und/oder das zweite Telegramm (225) mit der zweiten Fehlerinformation über den ersten Master-Kommunikationspfad (310) an den Masterteilnehmer (205) zurückzusenden.

7. Automatisierungsnetzwerk (100) nach einem der Ansprüche 1 bis 6,
wobei das erste Telegramm (220) und das zweite Telegramm (225) jeweils als EtherCAT Telegramme ausgebildet sind.

8. Verfahren zur Datenübertragung in einem Automatisierungsnetzwerk (100), das mehrere Netzwerkteilnehmer (200) aufweist, die wenigstens einen Masterteilnehmer (205), wenigstens eine Vermittlungseinrichtung (210) und wenigstens einen Slaveteilnehmer (215) umfassen,
wobei der Masterteilnehmer (205) Master-Ports, die Vermittlungseinrichtung (210) Vermittler-Ports und der Slaveteilnehmer (215) Slave-Ports aufweist, die jeweils eine Sendeeinheit (TX) zum Senden von Telegrammen und eine Empfangseinheit (RX) zum Empfangen von Telegrammen umfassen,
wobei die Sendeeinheit (TX) eines ersten Master-Ports (400) über einen ersten Master-Kommunikationspfad (310) mit der Empfangseinheit (RX) eines ersten Vermittler-Ports (500) und die Sendeeinheit (TX) eines zweiten Vermittler-Ports (525) über den ersten Master-Kommunikationspfad (310) mit der Empfangseinheit (RX) eines zweiten Master-Ports (415) verbunden ist,
wobei die Sendeeinheit (TX) des zweiten Master-Ports (415) über einen zweiten Master-Kommunikationspfad (315) mit der Empfangseinheit (RX) des zweiten Vermittler-Ports (515) und die Sendeeinheit (TX) des ersten Vermittler-Ports (500) über den zweiten Master-Kommunikationspfad (315) mit der Empfangseinheit (RX) des ersten Master-Ports (400) verbunden ist, um eine erste Doppelringstruktur (300) auszubilden,
wobei die Sendeeinheit (TX) eines dritten Vermittler-Ports (530) über einen ersten Slave-Kommunikationspfad (320) mit der Empfangseinheit (RX) eines ersten Slave-Ports (600) und die Sendeeinheit (TX) eines zweiten Slave-Ports (620) über den ersten Slave-Kommunikationspfad (320) mit der Empfangseinheit (RX) eines vierten Vermittler-Ports (550) verbunden ist,
wobei die Sendeeinheit (TX) des vierten Vermittler-Ports (550) über einen zweiten Slave-Kommunikationspfad (325) mit der Empfangseinheit (RX) des zweiten Slave-Ports (620) und die Sendeeinheit (TX) des ersten Slave-Ports (600) über den zweiten Slave-Kommunikationspfad (325) mit der Empfangseinheit (RX) des dritten Vermittler-Ports (530) verbunden ist, um eine zweite Doppelringstruktur (305) auszubilden,
wobei der Masterteilnehmer (205) zwei Telegramme versendet, die auf dem gleichen Datenpaket basieren,
wobei ein erstes Telegramm (220) über die Sendeeinheit (TX) des ersten Master-Ports (400) und über den ersten Master-Kommunikationspfad (310) an die Vermittlungseinrichtung (210) ausgegeben wird, und ein zweites Telegramm (225) über die Sendeeinheit (TX) des zweiten Master-Ports (415) und über den zweiten Master-Kommunikationspfad (315) an die Vermittlungseinrichtung (210) ausgegeben wird, wobei die Vermittlungseinrichtung (210) das erste Telegramm (220) über die Empfangseinheit (RX) des ersten Vermittler-Ports (500) empfängt und über die Sendeeinheit (TX) des dritten Vermittler-Ports (530) und über den ersten Slave-Kommunikationspfad (320) an die Empfangseinheit (RX) des ersten Slave-Ports (600) weiterleitet,
wobei der Slaveteilnehmer (215) das erste Telegramm (220) nach der Verarbeitung im Durchlauf über die Sendeeinheit (TX) des zweiten Slave-Ports (620) über den ersten Slave-Kommunikationspfad (320) an die Empfangseinheit (RX) des vierten Vermittler-Ports (550) weiterleitet,
wobei die Vermittlungseinrichtung (210) das über die Empfangseinheit (RX) des vierten Vermittler-Ports (550) empfangene erste Telegramm (220) über die Sendeeinheit (TX) des zweiten Vermittler-Ports (515) über den ersten Master-Kommunikationspfad (310) an die Empfangseinheit (RX) des zweiten Master-Ports (415) weiterleitet,
wobei die Vermittlungseinrichtung (210) das zweite Telegramm (225) über die Empfangseinheit (RX) des zweiten Vermittler-Ports (515) empfängt und über die Sendeeinheit (TX) des vierten Vermittler-Ports (550) über den zweiten Slave-Kommunikationspfad (325) an die Empfangseinheit (RX) des zweiten Slave-Ports (620) weiterleitet,
wobei der Slaveteilnehmer (215) das zweite Telegramm (225) über die Sendeeinheit (TX) des ersten Slave-Ports (600) über den zweiten Slave-Kommunikationspfad (325) an die Empfangseinheit (RX) des dritten Vermittler-Ports (530) weiterleitet,
wobei die Vermittlungseinrichtung (210) das über die Empfangseinheit (RX) des dritten Vermittler-Ports (530) empfangene zweite Telegramm (225) über die Sendeeinheit (TX) des ersten Vermittler-Ports (500) über den zweiten Master-Kommunikationspfad (315) an die Empfangseinheit (RX) des ersten Master-Ports (400) weiterleitet, und
wobei die Vermittlungseinrichtung (210) und der Slaveteilnehmer (215) ausgebildet sind, das erste Telegramm (220) im Fehlerbetrieb an den Masterteilnehmer (205) zurückzusenden, sodass der Masterteilnehmer (205) das erste Telegramm (220) über die Empfangseinheit (RX) des ersten Master-Ports (400) empfängt und/oder das zweite Telegramm (225) im Fehlerbetrieb an den Masterteilnehmer (205) zurückzusenden, sodass der Masterteilnehmer (205) das zweite Telegramm (225) über die Empfangseinheit (RX) des zweiten Master-Ports (415) empfängt.

9. Verfahren nach Anspruch 8,
wobei mehrere Slaveteilnehmer (215) vorgesehen sind, die in einer Kette angeordnet sind,
wobei die Slaveteilnehmer (215) in der Kette jeweils über den ersten Slave-Port (600) und über den zweiten Slave-Port (620) verbunden sind,
wobei die Kette an Slaveteilnehmern (215) über den ersten Slave-Kommunikationspfad (320) und über den zweiten Slave-Kommunikationspfad (325) mit dem dritten Vermittler-Port (530) und mit dem vierten Vermittler-Port (550) verbunden ist.

10. Verfahren nach einem der Ansprüche 8 oder 9,
wobei mehrere Vermittlungseinrichtungen (210) vorgesehen sind, die in einer Kette angeordnet sind,
wobei die Kette an Vermittlungseinrichtungen (210) über den ersten Master-Kommunikationspfad (310) und über den zweiten Master-Kommunikationspfad (315) mit dem ersten Master-Port (400) und dem zweiten Master-Port (415) verbunden ist, und wobei das erste Telegramm (220) und/oder das zweite Telegramm (225) jeweils eine Adressinformation aufweist, die der entsprechenden Vermittlungseinrichtung (210) anzeigt, ob das erste Telegramm (220) für den ersten Slave-Kommunikationspfad (320) und/oder ob das zweite Telegramm (225) für den zweiten Slave-Kommunikationspfad (325) und/oder ob das erste Telegramm (220) für den ersten Master-Kommunikationspfad (310) und/oder ob das zweite Telegramm (225) für den zweiten Master-Kommunikationspfad (315) bestimmt ist.

11. Verfahren nach Anspruch 8 bis 10,
wobei die Vermittlungseinrichtung (210) einen ersten Netzwerkverteiler (230) und einen zweiten Netzwerkverteiler (235) umfasst, die jeweils mehrere Verteiler-Ports aufweisen,
wobei ein erster Verteiler-Port (700) des ersten Netzwerkverteilers (230) dem ersten Vermittler-Port (500) der Vermittlungseinrichtung (210) entspricht und ein zweiter Verteiler-Port (705) des ersten Netzwerkverteilers (230) dem dritten Vermittler-Port (530) der Vermittlungseinrichtung (210) entspricht.

12. Verfahren nach Anspruch 11,
wobei ein an eine Störung angrenzender Netzwerkverteiler und/oder eine an eine Störung angrenzende Vermittlungseinrichtung im Fehlerbetrieb eine erste Fehlerinformation für das erste Telegramm (220) und/oder eine zweite Fehlerinformation für das zweite Telegramm (225) setzt und das erste Telegramm (220) mit der ersten Fehlerinformation über den zweiten Master-Kommunikationspfad (315) und/oder das zweite Telegramm (225) mit der zweiten Fehlerinformation über den ersten Master-Kommunikationspfad (310) an den Masterteilnehmer (205) zurück sendet,
wobei, sofern das erste Telegramm (220) bereits die erste Fehlerinformation und/oder das zweite Telegramm (225) bereits die zweite Fehlerinformation aufweist, der an eine Störung angrenzende Netzwerkverteiler und/oder die an eine Störung angrenzende Vermittlungseinrichtung (210) und/oder ein an eine Störung angrenzender Slaveteilnehmer im Fehlerbetrieb das erste Telegramm (220) mit der ersten Fehlerinformation und/oder das zweite Telegramm (225) mit der zweiten Fehlerinformation verwerfen.

13. Verfahren nach einem der Ansprüche 10 bis 12,
wobei ein Slaveteilnehmer (210) zwischen einer ersten Vermittlungseinrichtung (240) und einer zweiten Vermittlungseinrichtung (245) und/oder zwischen einem ersten Netzwerkverteiler (230) und einem zweiten Netzwerkverteiler (235) angeordnet ist,
wobei der Slaveteilnehmer (215) im Fehlerbetrieb die erste Fehlerinformation für das erste Telegramm (220) und/oder die zweite Fehlerinformation für das zweite Telegramm (225) setzt und das erste Telegramm (220) mit der ersten Fehlerinformation über den zweiten Master-Kommunikationspfad (315) und/oder das zweite Telegramm (225) mit der zweiten Fehlerinformation über den ersten Master-Kommunikationspfad (310) an den Masterteilnehmer (205) zurücksendet.

14. Verfahren nach einem der Ansprüche 8 bis 13,
wobei die Vermittlungseinrichtung (210) und der Slaveteilnehmer (215) eine Störung auf dem ersten Master-Kommunikationspfad (310) und/oder auf dem zweiten Master-Kommunikationspfad (315) und/oder auf dem ersten Slave-Kommunikationspfad (320) und/oder auf dem zweiten Slave-Kommunikationspfad (325) erkennen und den Fehlerbetrieb anstoßen.

15. Verfahren nach einem der Ansprüche 8 bis 14,
wobei das erste Telegramm (220) und das zweite Telegramm (225) jeweils als EtherCAT Telegramme ausgebildet sind.

## Claims

1. Automation network (100) comprising a plurality of network subscribers (200) comprising at least one master subscriber (205), at least one switching device (210) and at least one slave subscriber (215),
wherein the master subscriber (205) comprises master ports, the switching device (210) comprises switch ports and the slave subscriber (215) comprises slave ports, each of which comprises a transmitting unit (TX) for transmitting telegrams and a receiving unit (RX) for receiving telegrams,
wherein the transmitting unit (TX) of a first master port (400) is connected to the receiving unit (RX) of a first switch port (500) via a first master communication path (310) and the transmitting unit (TX) of a second switch port (515) is connected to the receiving unit of a second master port (415) via the first master communication path (310),
wherein the transmitting unit (TX) of the second master port (415) is connected to the receiving unit (RX) of the second switch port (515) via a second master communication path (315) and the transmitting unit (TX) of the first switch port (500) is connected to the receiving unit (RX) of the first master port (400) via the second master communication path (315) in order to form a first double ring structure (300),
wherein the transmitting unit (TX) of a third switch port (530) is connected to the receiving unit (RX) of a first slave port (600) via a first slave communication path (320) and the transmitting unit (TX) of a second slave port (620) is connected to the receiving unit (RX) of a fourth switch port (550) via the first slave communication path (320),
wherein the transmitting unit (TX) of the fourth switch port (550) is connected to the receiving unit (RX) of the second slave port (620) via a second slave communication path (325) and the transmitting unit (TX) of the first slave port (600) is connected to the receiving unit (RX) of the third switch port (530) via the second slave communication path (325) in order to form a second double ring structure (305),
wherein the master subscriber (205) is designed to send two telegrams based on the same data packet,
wherein the master subscriber (205) is designed to output a first telegram (220) to the switching device (210) via the transmitting unit (TX) of the first master port (400) and via the first master communication path (310), and to output a second telegram (225) to the switching device (210) via the transmitting unit (TX) of the second master port (415) and via the second master communication path (315),
wherein the switching device (210) is designed to receive the first telegram (220) via the receiving unit (RX) of the first switch port (500) and to forward said telegram to the receiving unit (RX) of the first slave port (600) via the transmitting unit (TX) of the third switch port (530) via the first slave communication path (320),
wherein the slave subscriber (215) is designed to forward the first telegram (220) to the receiving unit (RX) of the fourth switch port (550) after processing on the fly via the transmitting unit (TX) of the second slave port (620) via the first slave communication path (320),
wherein the switching device (210) is designed to forward the first telegram (220) received via the receiving unit (RX) of the fourth switch port (550) to the receiving unit (RX) of the second master port (415) via the transmitting unit (TX) of the second switch port (515) via the first master communication path (310),
wherein the switching device (210) is designed to receive the second telegram (225) via the receiving unit (RX) of the second switch port (515) and to forward said telegram to the receiving unit (RX) of the second slave port (620) via the transmitting unit (TX) of the fourth switch port (550) via the second slave communication path (325),
wherein the slave subscriber (215) is designed to forward the second telegram (225) to the receiving unit (RX) of the third switch port (530) via the transmitting unit (TX) of the first slave port (600) via the second slave communication path (325),
wherein the switching device (210) is designed to forward the second telegram (225) received via the receiving unit (RX) of the third switch port (530) to the receiving unit (RX) of the first master port (400) via the transmitting unit (TX) of the first switch port (500) via the second master communication path (315), and
wherein the switching device (210) and the slave subscriber (215) are designed, in fault mode, to return the first telegram (220) to the master subscriber (205), such that the master subscriber (205) receives the first telegram (220) via the receiving unit (RX) of the first master port (400), and/or to return the second telegram (225) to the master subscriber (205), such that the master subscriber (205) receives the second telegram (225) via the receiving unit (RX) of the second master port (415).

2. Automation network (100) according to Claim 1,
wherein a plurality of slave subscribers (215) are provided, which are arranged in a chain,
wherein the slave subscribers (215) in the chain are respectively connected via the first slave port (600) and via the second slave port (620),
wherein the chain of slave subscribers (215) is connected to the third switch port (530) and to the fourth switch port (550) via the first slave communication path (320) and via the second slave communication path (325).

3. Automation network (100) according to Claim 1 or 2,
wherein a plurality of switching devices (210) are provided, which are arranged in a chain,
wherein the chain of switching devices (210) is connected to the first master port (400) and the second master port (415) via the first master communication path (310) and via the second master communication path (315), and
wherein the first telegram (220) and/or the second telegram (225) each comprise address information indicating to the corresponding switching device (215) whether the first telegram (220) is intended for the first slave communication path (320) and/or whether the second telegram (225) is intended for the second slave communication path (325) and/or whether the first telegram (220) is intended for the first master communication path (310) and/or whether the second telegram (220) is intended for the second master communication path (315).

4. Automation network (100) according to any one of Claims 1 to 3,
wherein the switching device (210) comprises a first network distributer (230) and a second network distributer (235), each comprising a plurality of distributer ports,
wherein a first distributer port (700) of the first network distributer (230) corresponds to the first switch port (500) of the switching device (210) and a second distributer port (705) of the first network distributer (230) corresponds to the third switch port (530) of the switching device (210).

5. Automation network (100) according to Claim 4,
wherein a network distributer adjacent to a disturbance and/or a switching device (210) adjacent to a disturbance are/is designed, in fault mode, to set first fault information for the first telegram (220) and/or second fault information for the second telegram (225) and to return the first telegram (220) with the first fault information via the second master communication path (315) and/or the second telegram (225) with the second fault information via the first master communication path (310) to the master subscriber (205),
wherein the network distributer adjacent to a disturbance and/or the switching device (210) adjacent to a disturbance and/or a slave subscriber (215) adjacent to a disturbance are/is designed, in fault mode, provided that the first telegram (220) already comprises the first fault information and/or the second telegram (225) already comprises the second fault information, to discard the first telegram (220) with the first fault information and/or the second telegram (225) with the second fault information.

6. Automation network (100) according to any one of Claims 3 to 5,
wherein a slave subscriber (215) is arranged between a first switching device (240) and a second switching device (245) and/or between a first network distributer (230) and a second network distributer (235),
wherein the slave subscriber (215) is designed, in fault mode, to set the first fault information for the first telegram (220) and/or the second fault information for the second telegram (225) and to return the first telegram (220) with the first fault information via the second master communication path (315) and/or the second telegram (225) with the second fault information via the first master communication path (310) to the master subscriber (205).

7. Automation network (100) according to any one of Claims 1 to 6,
wherein the first telegram (220) and the second telegram (225) are each formed as EtherCAT telegrams.

8. Method for data transfer in an automation network (100) comprising a plurality of network subscribers (200) comprising at least one master subscriber (205), at least one switching device (210) and at least one slave subscriber (215),
wherein the master subscriber (205) comprises master ports, the switching device (210) comprises switch ports and the slave subscriber (215) comprises slave ports, each of which comprises a transmitting unit (TX) for transmitting telegrams and a receiving unit (RX) for receiving telegrams,
wherein the transmitting unit (TX) of a first master port (400) is connected to the receiving unit (RX) of a first switch port (500) via a first master communication path (310) and the transmitting unit (TX) of a second switch port (525) is connected to the receiving unit (RX) of a second master port (415) via the first master communication path (310),
wherein the transmitting unit (TX) of the second master port (415) is connected to the receiving unit (RX) of the second switch port (515) via a second master communication path (315) and the transmitting unit (TX) of the first switch port (500) is connected to the receiving unit (RX) of the first master port (400) via the second master communication path (315) in order to form a first double ring structure (300),
wherein the transmitting unit (TX) of a third switch port (530) is connected to the receiving unit (RX) of a first slave port (600) via a first slave communication path (320) and the transmitting unit (TX) of a second slave port (620) is connected to the receiving unit (RX) of a fourth switch port (550) via the first slave communication path (320),
wherein the transmitting unit (TX) of the fourth switch port (550) is connected to the receiving unit (RX) of the second slave port (620) via a second slave communication path (325) and the transmitting unit (TX) of the first slave port (600) is connected to the receiving unit (RX) of the third switch port (530) via the second slave communication path (325) in order to form a second double ring structure (305),
wherein the master subscriber (205) sends two telegrams based on the same data packet,
wherein a first telegram (220) is output to the switching device (210) via the transmitting unit (TX) of the first master port (400) and via the first master communication path (310), and a second telegram (225) is output to the switching device (210) via the transmitting unit (TX) of the second master port (415) and via the second master communication path (315),
wherein the switching device (210) receives the first telegram (220) via the receiving unit (RX) of the first switch port (500) and forwards said telegram to the receiving unit (RX) of the first slave port (600) via the transmitting unit (TX) of the third switch port (530) and via the first slave communication path (320),
wherein the slave subscriber (215) forwards the first telegram (220) to the receiving unit (RX) of the fourth switch port (550) after processing on the fly via the transmitting unit (TX) of the second slave port (620) via the first slave communication path (320),
wherein the switching device (210) forwards the first telegram (220) received via the receiving unit (RX) of the fourth switch port (550) to the receiving unit (RX) of the second master port (415) via the transmitting unit (TX) of the second switch port (515) via the first master communication path (310),
wherein the switching device (210) receives the second telegram (225) via the receiving unit (RX) of the second switch port (515) and forwards said telegram to the receiving unit (RX) of the second slave port (620) via the transmitting unit (TX) of the fourth switch port (550) via the second slave communication path (325),
wherein the slave subscriber (215) forwards the second telegram (225) to the receiving unit (RX) of the third switch port (530) via the transmitting unit (TX) of the first slave port (600) via the second slave communication path (325),
wherein the switching device (210) forwards the second telegram (225) received via the receiving unit (RX) of the third switch port (530) to the receiving unit (RX) of the first master port (400) via the transmitting unit (TX) of the first switch port (500) via the second master communication path (315), and
wherein the switching device (210) and the slave subscriber (215) are configured to return the first telegram (220) to the master subscriber (205) in fault mode, such that the master subscriber (205) receives the first telegram (220) via the receiving unit (RX) of the first master port (400), and/or to return the second telegram (225) to the master subscriber (205) in fault mode, such that the master subscriber (205) receives the second telegram (225) via the receiving unit (RX) of the second master port (415).

9. Method according to Claim 8,
wherein a plurality of slave subscribers (215) are provided, which are arranged in a chain,
wherein the slave subscribers (215) in the chain are respectively connected via the first slave port (600) and via the second slave port (620),
wherein the chain of slave subscribers (215) is connected to the third switch port (530) and to the fourth switch port (550) via the first slave communication path (320) and via the second slave communication path (325).

10. Method according to either one of Claims 8 and 9,
wherein a plurality of switching devices (210) are provided, which are arranged in a chain,
wherein the chain of switching devices (210) is connected to the first master port (400) and the second master port (415) via the first master communication path (310) and via the second master communication path (315), and
wherein the first telegram (220) and/or the second telegram (225) each comprise address information indicating to the corresponding switching device (210) whether the first telegram (220) is intended for the first slave communication path (320) and/or whether the second telegram (225) is intended for the second slave communication path (325) and/or whether the first telegram (220) is intended for the first master communication path (310) and/or whether the second telegram (225) is intended for the second master communication path (315).

11. Method according to Claims 8 to 10,
wherein the switching device (210) comprises a first network distributer (230) and a second network distributer (235), each comprising a plurality of distributer ports,
wherein a first distributer port (700) of the first network distributer (230) corresponds to the first switch port (500) of the switching device (210) and a second distributer port (705) of the first network distributer (230) corresponds to the third switch port (530) of the switching device (210).

12. Method according to Claim 11,
wherein a network distributer adjacent to a disturbance and/or a switching device adjacent to a disturbance set(s), in fault mode, to set first fault information for the first telegram (220) and/or second fault information for the second telegram (225) and return(s) the first telegram (220) with the first fault information via the second master communication path (315) and/or the second telegram (225) with the second fault information via the first master communication path (310) to the master subscriber (205),
wherein provided that the first telegram (220) already comprises the first fault information and/or the second telegram (225) already comprises the second fault information, the network distributer adjacent to a disturbance and/or the switching device (210) adjacent to a disturbance and/or a slave subscriber adjacent to a disturbance discard(s), in fault mode, the first telegram (220) with the first fault information and/or the second telegram (225) with the second fault information.

13. Method according to any one of Claims 10 to 12,
wherein a slave subscriber (210) is arranged between a first switching device (240) and a second switching device (245) and/or between a first network distributer (230) and a second network distributer (235),
wherein the slave subscriber (215), in fault mode, set(s) the first fault information for the first telegram (220) and/or the second fault information for the second telegram (225) and returns the first telegram (220) with the first fault information via the second master communication path (315) and/or the second telegram (225) with the second fault information via the first master communication path (310) to the master subscriber (205).

14. Method according to any one of Claims 8 to 13,
wherein the switching device (210) and the slave subscriber (215) detect a disturbance on the first master communication path (310) and/or on the second master communication path (315) and/or on the first slave communication path (320) and/or on the second slave communication path (325) and initiate the fault mode.

15. Method according to any one of Claims 8 to 14,
wherein the first telegram (220) and the second telegram (225) are each formed as EtherCAT telegrams.

## Revendications

1. Réseau d'automatisation (100) qui présente plusieurs participants au réseau (200) qui comprennent au moins un participant maître (205), au moins un dispositif de commutation (210) et au moins un participant esclave (215),
le participant maître (205) présentant des ports maîtres, le dispositif de commutation (210) présentant des ports de commutation, et le participant esclave (215) présentant des ports esclaves qui comprennent respectivement une unité d'émission (TX) pour émettre des télégrammes et une unité de réception (RX) pour recevoir des télégrammes,
l'unité d'émission (TX) d'un premier port maître (400) étant reliée par un premier chemin de communication maître (310) à l'unité de réception (RX) d'un premier port de commutation (500), et l'unité d'émission (TX) d'un deuxième port de commutation (515) étant reliée par un premier chemin de communication maître (310) à l'unité de réception d'un deuxième port maître (415),
l'unité d'émission (TX) du deuxième port maître (415) étant reliée par un deuxième chemin de communication maître (315) à l'unité de réception (RX) du deuxième port de commutation (515), et l'unité d'émission (TX) du premier port de commutation (500) étant reliée par le deuxième chemin de communication maître (315) à l'unité de réception (RX) du premier port maître (400) afin de réaliser une première structure en double anneau (300),
l'unité d'émission (TX) d'un troisième port de commutation (530) étant reliée par un premier chemin de communication esclave (320) à l'unité de réception (RX) d'un premier port esclave (600), et l'unité d'émission (TX) d'un deuxième port esclave (620) étant reliée par le premier chemin de communication esclave (320) à l'unité de réception (RX) d'un quatrième port de commutation (550),
l'unité d'émission (TX) du quatrième port de commutation (550) étant reliée par un deuxième chemin de communication esclave (325) à l'unité de réception (RX) du deuxième port esclave (620), et l'unité d'émission (TX) du premier port esclave (600) étant reliée par le deuxième chemin de communication esclave (325) à l'unité de réception (RX) du troisième port de commutation (530) afin de réaliser une deuxième structure en double anneau (305),
le participant maître (205) étant conçu pour émettre deux télégrammes qui sont basés sur le même paquet de données,
le participant maître (205) étant conçu pour envoyer un premier télégramme (220) par l'unité d'émission (TX) du premier port maître (400) et sur le premier chemin de communication maître (310) au dispositif de commutation (210), et pour envoyer un deuxième télégramme (225) par l'unité d'émission (TX) du deuxième port maître (415) et sur le deuxième chemin de communication maître (315) au dispositif de commutation (210),
le dispositif de commutation (210) étant conçu pour recevoir le premier télégramme (220) par l'unité de réception (RX) du premier port de commutation (500) et pour le retransmettre par l'unité d'émission (TX) du troisième port de commutation (530) sur le premier chemin de communication esclave (320) à l'unité de réception (RX) du premier port esclave (600),
le participant esclave (215) étant conçu pour retransmettre le premier télégramme (220) après le traitement lors du passage par l'unité d'émission (TX) du deuxième port esclave (620) sur le premier chemin de communication esclave (320) à l'unité de réception (RX) du quatrième port de commutation (550),
le dispositif de commutation (210) étant conçu pour retransmettre le premier télégramme (220), reçu par l'intermédiaire de l'unité de réception (RX) du quatrième port de commutation (550), par l'unité d'émission (TX) du deuxième port de commutation (515) sur le premier chemin de communication maître (310) à l'unité de réception (RX) du deuxième port maître (415),
le dispositif de commutation (210) étant conçu pour recevoir le deuxième télégramme (225) par l'unité de réception (RX) du deuxième port de commutation (515) et pour le retransmettre par l'unité d'émission (TX) du quatrième port de commutation (550) sur le deuxième chemin de communication esclave (325) à l'unité de réception (RX) du deuxième port esclave (620),
le participant esclave (215) étant conçu pour retransmettre le deuxième télégramme (225) par l'unité d'émission (TX) du premier port esclave (600) sur le deuxième chemin de communication esclave (325) à l'unité de réception (RX) du troisième port de commutation (530),
le dispositif de commutation (210) étant conçu pour retransmettre le deuxième télégramme (225), reçu par l'intermédiaire de l'unité de réception (RX) du troisième port de commutation (530), par l'unité d'émission (TX) du premier port de commutation (500) sur le deuxième chemin de communication maître (315) à l'unité de réception (RX) du premier port maître (400), et
dans lequel, en mode erreur, le dispositif de commutation (210) et le participant esclave (215) sont conçus pour renvoyer le premier télégramme (220) au participant maître (205) de sorte que le participant maître (205) reçoit le premier télégramme (220) par l'unité de réception (RX) du premier port maître (400), et/ou pour renvoyer le deuxième télégramme (225) au participant maître (205) de sorte que le participant maître (205) reçoit le deuxième télégramme (225) par l'unité de réception (RX) du deuxième port maître (415) .

2. Réseau d'automatisation (100) selon la revendication 1,
dans lequel plusieurs participants esclaves (215) sont prévus qui sont disposés en chaîne,
les participants esclaves (215) de la chaîne étant respectivement reliés par le premier port esclave (600) et par le deuxième port esclave (620),
la chaîne étant reliée au niveau de participants esclaves (215) au troisième port de commutation (530) et au quatrième port de commutation (550) par le premier chemin de communication esclave (320) et par le deuxième chemin de communication esclave (325).

3. Réseau d'automatisation (100) selon la revendication 1 ou 2,
dans lequel plusieurs dispositifs de commutation (210) sont prévus qui sont disposés en chaîne,
la chaîne étant reliée au niveau de dispositifs de commutation (210) au premier port maître (400) et au deuxième port maître (415) par le premier chemin de communication maître (310) et par le deuxième chemin de communication maître (315), et
le premier télégramme (220) et/ou le deuxième télégramme (225) présentant respectivement une information d'adresse qui indique au dispositif de commutation (215) correspondant si le premier télégramme (220) est destiné au premier chemin de communication esclave (320) et/ou si le deuxième télégramme (225) est destiné au deuxième chemin de communication esclave (325) et/ou si le premier télégramme (220) est destiné au premier chemin de communication maître (310) et/ou si le deuxième télégramme (220) est destiné au deuxième chemin de communication maître (315).

4. Réseau d'automatisation (100) selon l'une quelconque des revendications 1 à 3,
dans lequel le dispositif de commutation (210) comprend un premier répartiteur de réseau (230) et un deuxième répartiteur de réseau (235) qui présentent respectivement plusieurs ports répartiteurs, un premier port répartiteur (700) du premier répartiteur de réseau (230) correspondant au premier port de commutation (500) du dispositif de commutation (210), et un deuxième port répartiteur (705) du premier répartiteur de réseau (230) correspondant au troisième port de commutation (530) du dispositif de commutation (210).

5. Réseau d'automatisation (100) selon la revendication 4,
dans lequel un répartiteur de réseau adjacent à une perturbation et/ou un dispositif de commutation (210) adjacent à une perturbation est/sont conçu(s) en mode erreur pour définir une première information d'erreur pour le premier télégramme (220) et/ou une deuxième information d'erreur pour le deuxième télégramme (225), et pour renvoyer le premier télégramme (220) avec la première information d'erreur sur le deuxième chemin de communication maître (315) et/ou le deuxième télégramme (225) avec la deuxième information d'erreur sur le premier chemin de communication maître (310) au participant maître (205),
dans lequel le répartiteur de réseau adjacent à une perturbation et/ou le dispositif de commutation (210) adjacent à une perturbation et/ou un participant esclave (215) adjacent à une perturbation sont conçus en mode erreur, dans la mesure où le premier télégramme (220) présente déjà la première information d'erreur et/ou le deuxième télégramme (225) présente déjà la deuxième information d'erreur, pour rejeter le premier télégramme (220) avec la première information d'erreur et/ou le deuxième télégramme (225) avec la deuxième information d'erreur.

6. Réseau d'automatisation (100) selon l'une quelconque des revendications 3 à 5,
dans lequel un participant esclave (215) est disposé entre un premier dispositif de commutation (240) et un deuxième dispositif de commutation (245) et/ou entre un premier répartiteur de réseau (230) et un deuxième répartiteur de réseau (235),
le participant esclave (215) étant conçu en mode erreur pour définir la première information d'erreur pour le premier télégramme (220) et/ou la deuxième information d'erreur pour le deuxième télégramme (225), et pour renvoyer le premier télégramme (220) avec la première information d'erreur sur le deuxième chemin de communication maître (315) et/ou le deuxième télégramme (225) avec la deuxième information d'erreur sur le premier chemin de communication maître (310) au participant maître (205).

7. Réseau d'automatisation (100) selon l'une quelconque des revendications 1 à 6, dans lequel le premier télégramme (220) et le deuxième télégramme (225) sont respectivement réalisés sous forme de télégrammes EtherCAT.

8. Procédé de transmission de données dans un réseau d'automatisation (100) qui présente plusieurs participants au réseau (200) qui comprennent au moins un participant maître (205), au moins un dispositif de commutation (210) et au moins un participant esclave (215),
le participant maître (205) présentant des ports maîtres, le dispositif de commutation (210) présentant des ports de commutation, et le participant esclave (215) présentant des ports esclaves qui comprennent respectivement une unité d'émission (TX) pour émettre des télégrammes et une unité de réception (RX) pour recevoir des télégrammes,
l'unité d'émission (TX) d'un premier port maître (400) étant reliée par un premier chemin de communication maître (310) à l'unité de réception (RX) d'un premier port de commutation (500), et l'unité d'émission (TX) d'un deuxième port de commutation (525) étant reliée par le premier chemin de communication maître (310) à l'unité de réception (RX) d'un deuxième port maître (415),
l'unité d'émission (TX) du deuxième port maître (415) étant reliée par un deuxième chemin de communication maître (315) à l'unité de réception (RX) du deuxième port de commutation (515), et l'unité d'émission (TX) du premier port de commutation (500) étant reliée par le deuxième chemin de communication maître (315) à l'unité de réception (RX) du premier port maître (400) afin de réaliser une première structure en double anneau (300),
l'unité d'émission (TX) d'un troisième port de commutation (530) étant reliée par un premier chemin de communication esclave (320) à l'unité de réception (RX) d'un premier port esclave (600), et l'unité d'émission (TX) d'un deuxième port esclave (620) étant reliée par le premier chemin de communication esclave (320) à l'unité de réception (RX) d'un quatrième port de commutation (550),
l'unité d'émission (TX) du quatrième port de commutation (550) étant reliée par un deuxième chemin de communication esclave (325) à l'unité de réception (RX) du deuxième port esclave (620), et l'unité d'émission (TX) du premier port esclave (600) étant reliée par le deuxième chemin de communication esclave (325) à l'unité de réception (RX) du troisième port de commutation (530) afin de réaliser une deuxième structure en double anneau (305),
le participant maître (205) émettant deux télégrammes qui sont basés sur le même paquet de données,
un premier télégramme (220) étant envoyé par l'unité d'émission (TX) du premier port maître (400) et sur le premier chemin de communication maître (310) au dispositif de commutation (210), et un deuxième télégramme (225) étant envoyé par l'unité d'émission (TX) du deuxième port maître (415) et sur le deuxième chemin de communication maître (315) au dispositif de commutation (210),
dans lequel le dispositif de commutation (210) reçoit le premier télégramme (220) par l'unité de réception (RX) du premier port de commutation (500) et le retransmet par l'unité d'émission (TX) du troisième port de commutation (530) et sur le premier chemin de communication esclave (320) à l'unité de réception (RX) du premier port esclave (600),
le participant esclave (215) retransmettant le premier télégramme (220) après le traitement lors du passage par l'unité d'émission (TX) du deuxième port esclave (620) sur le premier chemin de communication esclave (320) à l'unité de réception (RX) du quatrième port de commutation (550),
le dispositif de commutation (210) retransmettant le premier télégramme (220) reçu par l'unité de réception (RX) du quatrième port de commutation (550) par l'intermédiaire de l'unité d'émission (TX) du deuxième port de commutation (515) sur le premier chemin de communication maître (310) à l'unité de réception (RX) du deuxième port maître (415),
dans lequel le dispositif de commutation (210) reçoit le deuxième télégramme (225) par l'unité de réception (RX) du deuxième port de commutation (515) et le retransmet par l'unité d'émission (TX) du quatrième port de commutation (550) sur le deuxième chemin de communication esclave (325) à l'unité de réception (RX) du deuxième port esclave (620),
le participant esclave (215) retransmettant le deuxième télégramme (225) par l'unité d'émission (TX) du premier port esclave (600) sur le deuxième chemin de communication esclave (325) à l'unité de réception (RX) du troisième port de commutation (530),
le dispositif de commutation (210) retransmettant le deuxième télégramme (225) reçu par l'unité de réception (RX) du troisième port de commutation (530) par l'intermédiaire de l'unité d'émission (TX) du premier port de commutation (500) sur le deuxième chemin de communication maître (315) à l'unité de réception (RX) du premier port maître (400), et
le dispositif de commutation (210) et le participant esclave (215) étant réalisés pour renvoyer le premier télégramme (220) en mode erreur au participant maître (205) de sorte que le participant maître (205) reçoit le premier télégramme (220) par l'unité de réception (RX) du premier port maître (400), et/ou pour renvoyer le deuxième télégramme (225) en mode erreur au participant maître (205) de sorte que le participant maître (205) reçoit le deuxième télégramme (225) par l'unité de réception (RX) du deuxième port maître (415).

9. Procédé selon la revendication 8,
dans lequel plusieurs participants esclaves (215) sont prévus qui sont disposés en chaîne,
les participants esclaves (215) de la chaîne étant reliés respectivement par le premier port esclave (600) et par le deuxième port esclave (620),
la chaîne étant reliée au niveau de participants esclaves (215) par le premier chemin de communication esclave (320) et par le deuxième chemin de communication esclave (325) au troisième port de commutation (530) et au quatrième port de commutation (550) .

10. Procédé selon l'une quelconque des revendications 8 et 9,
dans lequel plusieurs dispositifs de commutation (210) sont prévus qui sont disposés en chaîne,
la chaîne étant reliée au niveau de dispositifs de commutation (210) par le premier chemin de communication maître (310) et par le deuxième chemin de communication maître (315) au premier port maître (400) et au deuxième port maître (415), et
le premier télégramme (220) et/ou le deuxième télégramme (225) présentant respectivement une information d'adresse qui indique au dispositif de commutation (210) correspondant si le premier télégramme (220) est destiné au premier chemin de communication esclave (320) et/ou si le deuxième télégramme (225) est destiné au deuxième chemin de communication esclave (325) et/ou si le premier télégramme (220) est destiné au premier chemin de communication maître (310) et/ou si le deuxième télégramme (225) est destiné au deuxième chemin de communication maître (315).

11. Procédé selon la revendication 8 à 10,
dans lequel le dispositif de commutation (210) comprend un premier répartiteur de réseau (230) et un deuxième répartiteur de réseau (235) qui présentent respectivement plusieurs ports répartiteurs,
un premier port répartiteur (700) du premier répartiteur de réseau (230) correspondant au premier port de commutation (500) du dispositif de commutation (210), et un deuxième port de commutation (705) du premier répartiteur de réseau (230) correspondant au troisième port de commutation (530) du dispositif de commutation (210).

12. Procédé selon la revendication 11,
dans lequel un répartiteur de réseau adjacent à une perturbation et/ou un dispositif de commutation adjacent à une perturbation définit/définissent en mode erreur une première information d'erreur pour le premier télégramme (220) et/ou une deuxième information d'erreur pour le deuxième télégramme (225) et renvoie(nt) au participant maître (205) le premier télégramme (220) avec la première information d'erreur sur le deuxième chemin de communication maître (315) et/ou le deuxième télégramme (225) avec la deuxième information d'erreur sur le premier chemin de communication maître (310),
dans lequel, dans la mesure où le premier télégramme (220) présente déjà la première information d'erreur et/ou le deuxième télégramme (225) présente déjà la deuxième information d'erreur, le répartiteur de réseau adjacent à une perturbation et/ou le dispositif de commutation (210) adjacent à une perturbation et/ou un participant esclave adjacent à une perturbation rejettent en mode erreur le premier télégramme (220) avec la première information d'erreur et/ou le deuxième télégramme (225) avec la deuxième information d'erreur.

13. Procédé selon l'une quelconque des revendications 10 à 12,
dans lequel un participant esclave (210) est disposé entre un premier dispositif de commutation (240) et un deuxième dispositif de commutation (245) et/ou entre un premier répartiteur de réseau (230) et un deuxième répartiteur de réseau (235),
dans lequel le participant esclave (215) définit en mode erreur la première information d'erreur pour le premier télégramme (220) et/ou la deuxième information d'erreur pour le deuxième télégramme (225) et renvoie au participant maître (205) le premier télégramme (220) avec la première information d'erreur sur le deuxième chemin de communication maître (315) et/ou le deuxième télégramme (225) avec la deuxième information d'erreur sur le premier chemin de communication maître (310).

14. Procédé selon l'une quelconque des revendications 8 à 13,
dans lequel le dispositif de commutation (210) et le participant esclave (215) identifient une perturbation sur le premier chemin de communication maître (310) et/ou sur le deuxième chemin de communication maître (315) et/ou sur le premier chemin de communication esclave (320) et/ou sur le deuxième chemin de communication esclave (325) et initient le mode erreur.

15. Procédé selon l'une quelconque des revendications 8 à 14, dans lequel le premier télégramme (220) et le deuxième télégramme (225) sont respectivement réalisés sous forme de télégrammes EtherCAT.
